# EUROPÄISCHE PATENTSCHRIFT

(11) **EP 2 697 033 B1**
(45) Veröffentlichungstag und Bekanntmachung des Hinweises auf die Patenterteilung: **16.06.2021**
(21) Anmeldenummer: 12720788.4
(22) Anmeldetag: 12.04.2012
(51) Int. Cl.: B29C 48/154, B05C 5/02, B29C 48/21, B29C 48/92, B29C 48/255, B29C 48/86, B29C 48/08, B29C 48/70

(54) **VORRICHTUNG UND KOEXTRUSIONSDÜSE ZUM AUFTRAGEN UND/ODER HERSTELLEN EINES FLÄCHIGEN MATERIALVERBUNDS**
DEVICE AND COEXTRUSION NOZZLE FOR APPLYING AND/OR PRODUCING A PLANAR MATERIAL COMPOSITE
DISPOSITIF ET BUSE DE COEXTRUSION POUR APPLIQUER ET/OU PRODUIRE UN MATÉRIAU COMPOSITE PLAT

(30) Priorität: 12.04.2011 DE 102011016761
(43) Veröffentlichungstag der Anmeldung: 19.02.2014
(73) Patentinhaber: ITW Dynatec GmbH, 40822 Mettmann (DE)
(72) Erfinder: ROTHEN, Josef, 42699 Solingen (DE)
(74) Vertreter: Trinks, Ole
(86) Internationale Anmeldenummer: PCT/EP2012/001585
(87) Internationale Veröffentlichungsnummer: WO 2012/139757

(56) Entgegenhaltungen:
- EP-A1- 1 880 772
- EP-A1- 1 880 773
- EP-A1- 1 880 773
- EP-A1- 1 880 773
- EP-A2- 0 096 453
- EP-A2- 1 442 798
- EP-A2- 1 442 798
- EP-A2- 1 442 798
- WO-A1-03/053597
- DE-A1- 4 121 792
- DE-A1- 4 121 792
- DE-A1-102007 000 778
- DE-A1-102009 035 002
- DE-A1-102009 035 002
- JP-A- 2 036 921
- JP-A- 2 036 921
- JP-A- H0 236 921
- JP-A- 2010 022 947
- US-A- 2 761 417
- US-A- 3 607 345
- US-A- 3 901 636
- US-A- 3 901 636
- US-A- 4 106 437
- US-A- 5 183 508
- US-A- 5 183 508
- US-A- 5 183 508
- US-A- 5 636 790
- US-A- 5 636 790
- US-A1- 2005 015 050
- US-A1- 2005 015 050
- US-A1- 2006 062 899
- US-A1- 2007 045 352
- US-A1- 2007 045 352
- US-A1- 2007 045 352
- US-B1- 6 455 105
- US-B1- 6 455 105
- US-B1- 6 455 105

## Beschreibung

### GEBIET DER ERFINDUNG

Die Erfindung betrifft eine Vorrichtung zum Herstellen und/oder Auftragen eines aus zumindest zwei Flächenbereichen gebildeten, im Wesentlichen flächigen Materialverbunds vorgebbarer Verbundbreite, vorgebbarer Verbundhöhe und/oder vorgebbarer Verbundlänge. Insbesondere umfasst die Vorrichtung eine Auftrageinrichtung, die eine Auftragdüse bzw. Koextrusionsdüse aufweist. Die Auftragdüse bzw. Koextrusionsdüse umfasst einen schlitzförmigen, im Wesentlichen quer zur Auftragrichtung angeordneten Auslass, wodurch die Auftragdüse als Breitschlitzdüse gebildet ist, mit der ein Auftrag herstellbar ist, dessen Breite deutlich größer ist als dessen Auftragstärke respektive Auftragdicke oder -höhe. Außerdem umfasst die Vorrichtung eine Transporteinrichtung, die eine Transportfläche aufweist. Der Auftrag ist auf die Transportfläche auftragbar und wird dabei von der Auftragvorrichtung wegtranspor-tiert. Durch die Transporteinrichtung wird innerhalb der Vorrichtung eine Transportrichtung festgelegt, in die die Transportfläche respektive der hergestellte Materialverbund transportierbar sind. Die Transporteinrichtung kann auch durch ein bewegbares Substrat oder durch einen bewegbaren Träger gebildet sein, auf den die Flächenbereiche des Materialverbunds auftragbar sind. Derartige Substrate können auch sogenannte "Releaseliner" sein. Wahlweise kann der Materialverbund das Substrat respektive den Releaseliner umfassen.

### TECHNOLOGISCHER HINTERGRUND

Dem Stand der Technik sind Vorrichtungen zu entnehmen, mit denen flächige Verbundmaterialien durch Extrusionsverfahren hergestellt werden. Solche Vorrichtungen umfassen Extrusionsdüsen, die wahlweise mehrere Schichten unterschiedlicher Materialien, beispielsweise unterschiedlicher Polymere, übereinanderlegen. Die Einspeisung der Materialien in die Extrusionsdüse erfolgt mittels einer oder mehrerer (Schnecken-)Extruder, wobei die Materialien überwiegend in die Mitte der Düse, wie einer Breitschlitzdüse, eingespeist werden. Die zur Bildung einer vorgegebenen Stapel- oder Schichtkonfiguration des mehrschichtigen Materialverbunds erforderliche Verteilung der zu extrudierenden Komponenten (Extrudate) wird in der Regel dadurch erzielt, dass der innere Aufbau der Düse mehrere, zum Teil aufwendig herzustellende und zu reinigende Düsenkomponenten aufweist. Zur Beeinflussung des Fließverhaltens der in die Düse einströmenden Extrudate unterschiedlicher Viskosität hat es sich durchgesetzt, in der Düse eine oder mehrere Barrieren anzuordnen, mit denen der Austrag der Extrudate aus der Düse beeinflussbar sein soll. Bevorzugt weisen derartige Düsen eine Kontur auf, die der Kontur eines Kleiderbügels ähnelt. Wahlweise eignen sich derartige Barrieren dazu, die Querverteilung der Extrudate innerhalb der Düse zu regeln.

Um einen möglichst gleichmäßigen Auftrag der aus einer Extrusionsdüse austretenden Extrudate sicherzustellen, werden im Allgemeinen die Abmessungen der Austrittsöffnung durch Zug- und Druckschrauben angepasst. Zusätzlich können im Bereich der Austrittsöffnung angeordnete Bolzen gezielt beheizt oder gekühlt werden, wodurch die Fließeigenschaften des Extrudates an die Schichterfordernisse angepasst werden.

Problematisch bei Herstellungsverfahren zum Erzeugen von Verbundmaterialien mit mehreren Flächenbereichen oder mit mehreren Schichten durch derartige Extrusionsdüsen ist, dass eine Veränderung der Parameter des Verbundmaterials, wie beispielsweise eine Veränderung einzelner Bereichs- oder Schichtabmessungen, stets zur Folge hat, dass die Herstellungsvorrichtung respektive die Extrusonsdüse umgerüstet oder sogar vollständig ausgewechselt werden muss.

Die Druckschrift EP 0 096 453 A2 betrifft ein Verfahren zum mehrschichtigen Auftragen einer viskosen Flüssigkeit auf eine sich bewegende Bahn, wobei die Flüssigkeit synchron mit der Bahngeschwindigkeit quer an mittlere Einlassbereiche, die jeweils an einer Seite jeder Schlitzkammer von zwei, im Wesentlichen parallel einander gegenüberliegenden und sich in Längsrichtung erstreckenden schmalen Schlitzkammern gebildet sind, gefördert wird, um entlang jedes Schlitzes eine Längsverteilung der Flüssigkeit ohne eine wesentliche Querverteilung zu erreichen, wobei die in den beiden Schlitzkammern in Längsrichtung verteilte Flüssigkeit dann quer nach außen und gegeneinander sowie gegeneinander abgewendete Seiten von Leitmitteln gerichtet wird, um die Flüssigkeit umzulenken und durch zwei einander benachbarte Öffnungen auszubringen, von denen jede auf der dem Einlassbereich gegenüberliegen-den Seite der jeweiligen Schlitzkammer vorgesehen ist, so dass für die Flüssigkeit an den einander gegenüberliegenden Seiten der Leitmittel entgegengesetzte und durch die entsprechenden Öffnungen führende zick-zack-förmige Strömungspfade erhalten werden, wobei die Breite der Öffnungen für eine Erhöhung oder Reduzierung der Strömungsgeschwindigkeit der aus-tretenden Flüssigkeit variiert wird, und zwar zur Anpassung an die durch die Bahn erzeugte Schwerwirkung für Flüssigkeiten mit sehr unterschiedlichen Viskositäten, um einen kontinuierlichen und gleichförmigen Auftrag oder Diskontinuitäten zu erhalten, und zwar im Wesentlichen gleichzeitig aus beiden Öffnungen.

Die Druckschrift US 2006/062899 A1 betrifft ein ähnliches Verfahren zum mehrschichtigen Auftragen einer Viskosenflüssigkeit auf eine sich bewegende Bahn.

### DARSTELLUNG DER ERFINDUNG

Vor diesem Hintergrund liegt der Erfindung die Aufgabe zugrunde, Maßnahmen zur Fertigung vorzugsweise klebender Verbundmaterialien anzugeben, durch die der insbesondere apparative Herstellungsaufwand gegenüber dem Stand der Technik so reduziert wird, dass die funktionalen Eigenschaften des Verbundmaterials nicht beeinträchtigt werden.

Diese Aufgabe wird durch eine Vorrichtung gemäß Anspruch 1 gelöst. Demnach ist insbesondere vorgesehen, dass die Auftragsdüse bzw. Koextrusionsdüse zumindest eine Fördereinrichtung zum Fördern eines Extrudates auf die Transportfläche umfasst. Mit der Fördereinrichtung ist das Fördervolumen, die Fördermasse, die Fördergeschwindigkeit und/oder die Förderdauer zumindest eines der Extrudate steuerbar. Wahlweise kann eine Doppelspaltdüse vorgesehen sein, bei der der Düsenschlitz zwei einander gegenüber liegend angeordnete Schlitzsegmente umfasst. Die Düsenschlitzlänge der Auftragsdüse bzw. der Koextrusionsdüse bestimmt nahezu die maximale Verbundbreite des Materialverbunds. Der aus der Auftrageinrichtung, insbesondere aus der Auftragdüse, austretende Material-verbund ist auf die Transporteinrichtung auftragbar. Der Materialverbund kann auf eine Transportfläche der Transporteinrichtung auftragbar sein.

Die Transportfläche ist in Transportrichtung förderbar. Es kann zweckmäßig sein, wenn der aus der Auftrageinrichtung austretende Materialverbund auf ein Substrat auftragbar ist, welches insbesondere von der Transporteinrichtung in Transportrichtung förderbar ist. Dabei kann das Substrat auf der Transportfläche der Transporteinrichtung angeordnet sein. Die Transporteinrichtung kann aber auch aus dem Substrat gebildet sein oder das Substrat umfassen. Das Substrat kann mehrere Substratabschnitte umfassen, beispielsweise kann das Substrat oder die Substratabschnitte aus einem Folienmaterial, einem Faserwerkstoff oder einer Tapete gebildet sein. Das Substrat kann auf einer Rolle oder Walze angeordnet sein oder von dieser abwickelbar sein. Alternativ kann das Substrat so beschaffen, insbesondere geschnitten sein, dass es von einer Unterlage abstapelbar ist.

Die Fördereinrichtung kann zumindest eine Pumpe zum Fördern eines Extrudates umfassen. Der Pumpe oder den Pumpen kann zumindest ein Antrieb zugeordnet sein. Besonders vorteilhaft ist es, wenn die Fördereinrichtung zumindest ein Schaltelement umfasst. Das Schaltelement kann zumindest ein Ventil und/oder zumindest eine Rückführung aufweisen, so dass das von der Fördereinrichtung geförderte Extrudat innerhalb Auftrageinrichtung respektive innerhalb der Fördereinrichtung zirkuliert werden kann oder zirkulierbar ist.

Die Flächenbereiche sind innerhalb des Verbunds übereinander angeordnet und der Verbund verfügt zumindest abschnittsweise über einen schichtartigen Aufbau, d. h. die Flächenbereiche haben im Wesentlichen parallele flächenhafte Ausdehnungen und berühren einander flächig.

Zumindest einer der Flächenbereiche des Materialverbunds ist aus einem Klebstoff, insbesondere aus einem Heißschmelzklebstoff, gebildet. Bevorzugt sind drucksensitive Haftklebstoffe (Pressure Sensitive Adhesive, PSA), wahlweise auf Basis eines Elastomers, betroffen. Die Klebstoffschicht kann ein Ethylen-Vinyl-Acetat (EVA) umfassen und lösungsmittelfrei sein. Es kann aber auch ein durch ein Lösungsmittel - wie etwa Wasser - aktivierbarer Klebstoff vorgesehen sein. Ebenfalls vorgesehen sind Flächenbereiche, die strahlhärtende Klebstoffe wie etwa UV-Acrylate umfassen, sowie feuchtigkeitsvernetzende Klebstoffe wie Polyurethan (Polyurethane Reactive, PUR) oder Polyolefin (Polyolefin Reactive POR).

Derartige flächige Verbundmaterialien mit zumindest einer oder mehreren Klebstoffflächenbereichen respektive Klebstoffschichten können beispielsweise bei Haftbeschichtungen oder als Verpackungsbestandteil zum Einsatz kommen.

Die Auftrageinrichtung kann bedarfsweise heizbar sein, wodurch die unter Wärmeeinwirkung verflüssigbaren Extrudate ihre Fließeigenschaften ändern. Wahlweise kann die Transporteinrichtung über ein Transportband verfügen, dessen Oberfläche die Transportfläche bildet. Das Transportband kann endlos sein. Alternativ dazu kann die Transportfläche auch gekrümmt sein, wie es beispielsweise der Fall wäre, wenn die Transporteinrichtung eine Transportwalze umfasst. Der Materialauftrag kann beispielsweise direkt auf die Transportfläche aufgetragen werden. Hierbei kann es zweckmäßig sein, wenn die Transportfläche eine Beschichtung, insbesondere eine Anti-Haft-Beschichtung, aufweist. Die Anti-Haft-Beschichtung kann aus einem Silikon gebildet sein bzw. ein Silikon umfassen. Zweck der Anti-Haft-Beschichtung der Transportfläche respektive des Transportbandes ist, dass der auf der Transportfläche aufgebrachte Materialverbund leichter entnommen werden kann.

Der Auftrag des flächigen Materialverbunds erfolgt vorzugsweise der Gestalt, dass die Verbundlänge des Materialverbunds im Wesentlichen parallel zur Transportrichtung und somit auch zur Transportfläche verläuft. Die Verbundbreite des Materialverbunds verläuft dabei senkrecht oder nahezu senkrecht zur Transportrichtung. Idealerweise spannen die Verbundlänge und die Verbundbreite eine Ebene auf, welche zur Transportfläche parallel verläuft oder in dieser liegt. Die Verbundhöhe des Materialverbunds verläuft im Wesentlichen senkrecht zur Transportfläche, d. h. sie verläuft im Wesentlichen senkrecht zur Verbundlänge und zur Verbundbreite.

Das die Auftragsdüse/Koextrusionsdüse verlassende Koextrudat ist als in vertikaler oder nahezu vertikaler Richtung verlaufender Gießvorhang gebildet, der auf die Transporteinrichtung oder auf ein auf der Transportfläche in Transportrichtung förderbares Substrat gerichtet ist. Der Extrudatvorhang berührt die Transportfläche respektive das Substrat, wodurch bei Bewegung der Transportfläche respektive des Substrates in Transportrichtung ein zumindest filmartiger Materialauftrag auf der bewegten Transportfläche respektive auf dem bewegten Substrat gebildet wird. Die Flächenbereiche sind dabei in aufeinander angeordneten, d. h. entlang der Verbundhöhe aufeinander gestapelten Schichten des Verbunds gebildet. Zur Ausübung eines mechanischen Druckes auf die Extrudate respektive das Koextrudat, insbesondere auf den Gießvorhang, können die Extrudate auch einer Walze oder dem Spalt eines Walzenpaars zugeführt werden. Insbesondere dann, wenn eines der Extrudate Polyethylen (PE) umfasst, kann es zusätzlich vorgesehen sein, zumindest eine Walze zu kühlen.

Der Materialauftrag oder Materialfilm bildet den herzustellenden bzw. aufzutragenden Materialverbund, wobei es zweckmäßig sein kann, dass die Transporteinrichtung und/oder die Transportfläche kühlbar sind. Dabei kann der Transporteinrichtung eine Kühleinrichtung zugeordnet sein, durch die der aus dem Koextrudat gebildete (schmelz-)flüssige Materialfilm kühlbar ist. Alternativ kann auch vorgesehen sein, dass das Koextrudat ohne Bildung eines Extrudatvorhangs direkt auf die Transporteinrichtung oder auf das Substrat auftragbar ist.

Wahlweise kann die Kühleinrichtung über ein Kühlband verfügen, welches beispielsweise elektrisch kühlbar ist. Durch die Kühleinrichtung respektive durch das Kühlband sind die Transportfläche und/oder ein auf der Transportfläche förderbares Substrat zumindest abschnittsweise kühlbar. Der aus der zumeist beheizten oder beheizbaren Auftrageinrichtung respektive Auftragdüse austretende, flüssige und erhitzte Materialverbund kühlt sich durch die Wirkung der Kühleinrichtung auf der Transporteinrichtung ab und/oder wechselt in einen im Wesentlichen festen oder zumindest stärker viskosen Zustand. Handelt es sich bei einem oder mehreren aufgetragenen Extrudaten beispielsweise um Heißschmelzklebstoffe, können diese durch die Kühleinrichtung ausgehärtet werden, wodurch sie einfacher von der Transporteinrichtung entnommen werden und anschließend weiterverarbeitet werden können. Eine Bandkühlung ist u. a. aus der DE 198 00 683 B4 bekannt.

Erfindungsgemäß sind die Verbundbreite und/oder die Verbundlänge und/oder die Verbundhöhe mit der Auftragdüse der Auftrageinrichtung der Vorrichtung zum Auftragen und/oder Herstellen eines flächigen Materialverbunds einstellbar. Zusätzlich kann die Transporteinrichtung an der Einstellung der Verbundlänge und/oder der Verbundbreite und/oder der Verbundhöhe insofern beteiligt sein, als die Transportgeschwindigkeit der Transporteinrichtung steuerbar, insbesondere ab- und zuschaltbar, ist.

Das Einstellen der Verbundlänge des Materialverbunds kann beispielsweise so erfolgen, dass die Auftragdüse während des Materialauftrags kurzzeitig deaktiviert wird. Dadurch wird der Auftrag des Materialverbunds auf die bewegte Transporteinrichtung und/oder auf das auf der bewegten Transportfläche geförderte Substrat unterbrochen. Durch die Wahl des Unterbrechungszeitpunktes oder des Deaktivierungszeitpunktes kann bei konstanter Transportgeschwindigkeit die Verbundlänge des Materialverbunds bestimmt werden. In dem die Fördermenge der zur Bildung des Materialverbunds verwendeten Extrudate in der Düse bei konstanter Transportgeschwindigkeit der Transporteinrichtung erhöht oder reduziert wird, kann die Verbundhöhe des flächigen Materialverbunds verändert und somit eingestellt werden. Ein mengenmäßig hoher Durchsatz an Extrudaten durch die Auftragdüse führt zu einer größeren Verbundhöhe des Materialverbunds, d. h. der Materialverbund wird dadurch dicker. Das Einstellen der Verbundbreite des Materialverbunds kann beispielsweise dadurch erfolgen, dass die Austrittsbreite des Düsenschlitzes des Auslasses der Düse durch zumindest einen im Koextrusionskanal angeordneten Schieber veränderbar ist, wie aus der DE 100 23 895.5 bekannt ist. Der einzelne Zonenabschnitt einer Breitschlitzdüse, denen jeweils eine Fördereinrichtung zugeordnet ist, sind durch Förderungsunterbrechung ab- und zuschaltbar.

Bei einer besonders bevorzugten Ausgestaltung der erfindungsgemäßen Vorrichtung kann vorgesehen sein, dass die Flächenbereichsbreite, und/oder die Flächenbereichslänge und/oder die Flächenbereichshöhe zumindest einer der Flächenbereiche, vorzugsweise jedes Flächenbereichs, des Materialverbunds zumindest abschnittsweise durch die Auftragdüse einstellbar ist. Das Einstellen der Flächenbereichsbreite, der Flächenbereichshöhe und/oder der Flächenbereichslänge eines Flächenbereichs erfolgt dabei so, dass die Flächenbereichsbreite, Flächenbereichshöhe und Flächenbereichslänge des jeweils anderen Flächenbereichs nicht beeinflusst werden. So kann beispielsweise durch die Variation der Fördermenge des ersten Extrudates, welches den ersten Flächenbereich des Materialverbunds bildet, die Flächenbereichshöhe des ersten Flächenbereichs erhöht werden, was dazu führt, dass der erste Flächenbereich dicker wird. Die Förderung des zweiten Extrudates wird dadurch nicht beeinflusst, wodurch der zweite Flächenbereich seine Eigenschaften und seine Abmessungen beibehält. Es ist demnach möglich, die Eigenschaften, insbesondere die Länge, Breite und Höhe des zweiten Flächenbereichs, auf der den ersten Flächenbereich auftragbar ist, gänzlich unverändert zu lassen.

Es ist alternativ auch möglich, bei Bedarf die Eigenschaften beider Flächenbereiche, die einen insbesondere zweischichtigen Materialverbund bilden, bei dem die beiden Flächenbereiche jeweils eine Schicht des Verbunds bilden, zu verändern und bedarfsgerecht einzustellen. Dies kann wahlweise abschnittsweise oder über die gesamte Verbundbreite, Verbundlänge oder Verbundhöhe erfolgen. Durch diese Fülle an Variationsmöglichkeiten können Schicht- oder Flächenbereichskonfigurationen beliebiger Ausgestaltung hergestellt werden, ohne dass es dafür erforderlich ist, die erfindungsgemäße Vorrichtung umzurüsten, oder womöglich eine Düse der Auftrageinrichtung der Vorrichtung auszutauschen. Insofern ist es auch nicht erforderlich, die Vorrichtung zum Zweck einer Umrüstung einer Komponente oder eines Austausches einer Komponente stillzulegen. Je nach den Anforderungen an die Beschaffenheit und Konfiguration des herzustellenden flächigen Materialverbunds sind lediglich die Betriebseinstellungen der Vorrichtung zu verändern. Diese Betriebseinstellungen betreffen beispielsweise im Hinblick auf das Fließverhalten der Extrudate die Mengen, die Drücke und die Temperaturen der durch die Düse bzw. durch Bereiche der Düse geförderten Extrudate, die Ansteuerung beteiligter Bereiche der Düse sowie die Geschwindigkeit und gegebenenfalls die Kühltemperatur der Transporteinrichtung.

Bei einem oder mehreren Extrudaten kann es sich um einen Schmelzkleber, insbesondere um einen Heißschmelzkleber handeln. Der Schmelzklebstoff kann dabei Basispolymere, wie Polyamide (PA), Polyethylen (PE), amorphe Polyalpholefine (APAO), Ethylenvinylacetat-Copolymere (EVAC), Polyester-Elastomere (TPE-E), Polyurethan-Elastomere (TPE-U), Copolyamid-Elastomere (TPE-A) VinylpyrrolidonNinyacetat-Copolymere und andere umfassen. Im Übrigen kann der Schmelzklebstoff Harze, wie Kolophonium, Terpene und/oder Kohlenwasserstoffharze enthalten und ebenso Stabilisatoren wie Antioxidantien, Metalldesaktivatoren und/oder Lichtschutzmittel, sowie gegebenenfalls Wachse, wie natürliche Wachse (Bienenwachs) und/oder synthetische Wachse (voll-, teilsynthetisch, chemisch verändert).

Der apparative Herstellungsaufwand bei der Herstellung insbesondere klebender Verbundmaterialien wird im Übrigen erfindungsgemäß auch durch eine Koextrusionsdüse gemäß Anspruch 4 reduziert. Demnach ist eine Koextrusionsdüse zum Erzeugen und/oder Auftragen eines flächigen, aus einem Koextrudat gebildeten Materialauftrags eines Verbundmaterials aus einem aus einem ersten Extrudat gebildeten ersten Flächenbereich und aus einem aus zumindest einem zweiten Extrudat gebildeten zweiten Flächenbereich vorgesehen. Die erfindungsgemäße Koextrusionsdüse umfasst einen ersten Einlass für das erste Extrudat und einen zweiten Einlass für das zweite Extrudat. Sie umfasst ferner einen Auslass für das Koextrudat, d. h. die Kombination beider in der Düse zusammengeführter Extrudate. Der Auslass ist vorzugsweise an der Unterseite der Düse angeordnet, so dass das Koextrudat unter der Einwirkung der Drücke der in der Düse geförderten Extrudate und gegebenenfalls unter Einwirkung der Schwerkraft aus der Koextrusionsdüse heraustritt. Wahlweise kann das Koextrudat mit einer Austrittsgeschwindigkeit beaufschlagt werden, welche durch die Förderung der Extrudate durch die Düse bestimmbar ist.

Die Erfindung sieht dazu vor, dass die Koextrusionsdüse zumindest eine integrierte Fördereinrichtung umfasst, welche fluidisch mit einem oder mehreren Einlässen verbunden ist. Mit der Fördereinrichtung ist zumindest ein Extrudat durch die Koextrusionsdüse zum Auslass förderbar. Das Fördervolumen, die Fördermasse, die Fördergeschwindigkeit und/oder die Förderdauer zumindest eines der Extrudate sind mit der Fördereinrichtung steuerbar.

Bevorzugt kann die Auftragbreite des den Auslass verlassenden Materialauftrags dabei veränderbar sein, wobei die Auftragbreite kleiner oder gleich der im Wesentlichen durch die Breite des Auslasses festgelegten maximalen Auftragbreite ist. Die Auftragbreite ist somit kleiner oder gleich der im Wesentlichen durch die Breite des Auslasses festgelegten maximalen Auftragbreite.

Bevorzugt kann auch an dem zweiten Einlass zumindest eine Fördereinrichtung fluidisch angeschlossen sein, welche ebenfalls Bestandteil der erfindungsgemäßen Koextrusionsdüse ist. Es ist zweckmäßig, wenn jede der Fördereinrichtungen der Koextrusionsdüse zumindest eine Pumpe und zumindest ein Schaltelement wie etwa ein Ventil umfasst. Die Fördereinrichtung kann außerdem zumindest eine fluidische, in die zur Pumpe führende Leitung zurückführende, durch das Schaltelement als schaltbare Leitung zum Rückführen des Extrudates gebildete Rückführung umfassen. Die Pumpendrehzahl kann zur Steuerung der Fördermenge veränderbar und über zumindest einen Pumpenantrieb steuerbar sein. Der Pumpe kann wahlweise ein Antrieb zugeordnet sein. Sind mehrere Fördereinrichtungen vorgesehen, können mehrere Pumpen zweckmäßig sein, denen entweder ein gemeinsamer steuerbarer Antrieb oder mehrere einzeln steuerbare Antriebe zugeordnet sein können.

Es kann ferner möglich sein, mit der Fördereinrichtung die Förderung eines oder mehrerer der Extrudate durch die Koextrusionsdüse hindurch zu unterbrechen, ohne dabei den Fluss der Extrudate respektive den Druck der Extrudate in den den Einlässen zugeordneten Leitungen oder Zuführungen zu stören und zu verändern.

Das Extrudat behält durch die Rückführung seine Fließeigenschaften bei, obwohl der Durchfluss durch die Koextrusionsdüse unterbrochen werden kann. Zur Beibehaltung der Fließeigenschaften der Extrudate werden diese dann innerhalb der Fördereinrichtungen zirkulierend weitergefördert. Erreicht wird diese Beibehaltung der Fliesseigenschaften der Extrudate dadurch, dass vor dem Einlass ein Schaltelement angeordnet ist, welches bei einer gewünschten Unterbrechung der Förderung des Extrudates durch die Koextrusionsdüse den Extrudatfluss vor dem Einlass in eine Rückführung oder einen Rückführkanal umleitet, welcher in Flussrichtung betrachtet vor der Pumpe der Fördereinrichtung in die Förderleitung zurückführt. Dadurch wird der erforderliche Druck der Extrudate im Wesentlichen beibehalten, wodurch eine unerwünschte Blasenbildung in der Auftrageinrichtung der erfindungsgemäßen Vorrichtung vermieden wird. Im Übrigen ist dadurch gewährleistet, dass bei einer Änderung der Schaltstellung der Ventile der Fördereinrichtungen beispielsweise zur Fortsetzung des Koextrudat-Auftrags der den Auslass verlassende Koextrudat-Film bedingt durch den in der Auftragvorrichtung im Wesentlichen konstant gehaltenen Druck der Extrudate nicht druckbedingt abreißt. Eine Unterbrechung des Auftrags des Extrudats etwa auf die Transporteinrichtung kann demnach durch Betätigung des Schaltelements und anschließende Zirkulation des Extrudats innerhalb der Auftrageinrichtung respektive innerhalb der Fördereinrichtung erfolgen. Eine Fortsetzung des Auftrags etwa nach einer Unterbrechung des Auftrags kann durch erneute Betätigung des Schaltelements erfolgen, wodurch das Extrudat nicht mehr länger in der Auftrageinrichtung zirkuliert sondern wieder zu dem Auslass der Auftragdüse förderbar ist.

Wahlweise kann der zur Förderung des Extrudates in die Auftrageinrichtung vorgesehene, mit einem oder mehreren den Einlässen verbundene Extruder seine Fördergeschwindigkeit an die veränderte Gesamtfördermenge anpassen, insbesondere reduzieren.

Der durch die Koextrusionsdüse erzeugte Materialauftrag kann abschnittsweise erfolgen, so dass die Abschnitte des Materialauftrags auf der Transportfläche und/oder auf einem auf der Transportfläche geförderten Substrat insbesondere streifenförmige Unterbrechungen aufweisen. Die streifenförmigen Unterbrechungen können wahlweise im Wesentlichen parallel zur Transportrichtung verlaufen oder im Wesentlichen quer zur Transportrichtung. Es kann auch zweckmäßig sein, dass die Unterbrechungen in einem Winkel zur Transportrichtung und/oder gewinkelt angeordnet sind. Sind die Unterbrechungen des flächigen Materialauftrags parallel zur Transportrichtung angeordnet, führt dies dazu, dass auf der Transportfläche ein Materialauftrag gebildet wird, der mit oder ohne seitliche Abstände zueinander streifen- oder bahnförmige Abschnitte aufweist. Durch die Anordnung einer zur Transportrichtung im Wesentlichen quer verlaufenden Unterbrechung des Materialauftrags können bahnförmige Abschnitte des Materialauftrags in ihrer Länge beschränkt werden.

Die Unterbrechungen können im Übrigen in ihrer Breite und/oder in ihrer Länge jeweils bezogen auf die Materialverbundbreite und -länge zumindest abschnittsweise variieren. Dadurch ergeben sich Verbundanordnungen mit zumindest einem Versatz eines Flächenbereichabschnitts relativ zu einem anderen Abschnitt. Der Versatz kann bezogen auf die Abmessungen des Materialverbunds in länglicher oder seitlicher Richtung orientiert sein.

Erfindungsgemäß umfasst die erfindungsgemäße Koextrusionsdüse einen Koextrusionskanal, welcher in einem Gehäuse der Koextrusionsdüse angeordnet ist. In den Koextrusionskanal münden der erste und der zweite Einlass für das erste und das zweite Extrudat. An dem Koextrusionskanal ist der Auslass für das Koextrudat angeschlossen. Es ist zweckmäßig, wenn der Koextrusionskanal im Wesentlichen parallel zu der Längsausrichtung des Düsenschlitzes verläuft.

Die Koextrusionsdüse kann bevorzugt zumindest einen im Koextrusionskanal angeordneten Schieber umfassen, mit dem die Breite des Auslasses und/oder die Verbundbreite des Materialverbunds und/oder zumindest eines Abschnitts des Materialverbunds veränderbar ist.

Die Ausgestaltung der Koextrusionsdüse mit einem integrierten Koextrusionskanal gestattet es, dass der zweite Einlass so in den Koextrusionskanal mündet, dass das zweite Extrudat an einer von dem ersten Extrudat gebildeten Extrudatoberfläche anordbar ist. Es ist demnach möglich, das zweite Extrudat gegen eine von dem ersten Extrudat gebildete Extrudatoberfläche zu fahren. Sind die Extrudate beispielsweise aus insbesondere schmelzflüssigen, zuvor etwa durch eine Heizvorrichtung aufbereiteten Klebstoffen gebildet, führt die flächige Anordnung des zweiten Extrudats an einer von dem ersten Extrudat gebildeten Extrudatfläche dazu, dass die Extrudatoberflächen nicht nur aufgrund ihres noch nicht erstarrten Zustandes aneinanderhaften. Bei dessen Förderung nimmt das erste Extrudat das zweite Extrudat mit.

Vorzugsweise kann in dem Koextrusionskanal eine Trennwand angeordnet sein, durch die der erste Einlass und der zweite Einlass voneinander getrennt sind. Die Trennwand kann so angeordnet sein, dass sie im Wesentlichen parallel zu dem schlitzförmigen Auslass der Koextrusionsdüse verläuft. Die Trennwand kann bewirken, dass die durch den ersten und den zweiten Einlass geförderten Extrudate in der Koextrusionsdüse, insbesondere in dem Koextrusioinskanal, zumindest bereichsweise so gefördert werden können, dass die Extrudate einander nicht berühren. Dadurch können Durchmischungen der Extrudate vermieden werden, die beispielsweise durch eine in Bereichen der Düse turbolent verlaufende Strömung verursacht werden.

Die erfindungsgemäße Koextrusionsdüse umfasst mehrere, insbesondere bezogen auf die Breite der Düse nebeneinander angeordnete Koextrusionskammem, welche in dem Koextrusionskanal oder im Bereich des Koextrusionskanals angeordnet sind. Bezogen auf die Breitenrichtung der Düse wird der Koextrusionskanal beispielsweise durch die Koextrusionskammem in mehrere, zueinander benachbarte, voneinander getrennte Volumenbereiche unterteilt. Die Kammern können durch Stege oder Kammerwände voneinander getrennt sein. Alternativ oder zusätzlich können Koextrusionskammem vorgesehen sein, die einander bezogen auf die Transportrichtung einander gegenüberliegen. Durch die Koextrusionskammem ist insbesondere der Koextrusionskanal respektive der am Koextrusionskanal angeschlossene Auslass für das Koextrudat in Breitenabschnitte der Breitschlitzdüse unterteilbar, durch die die Breite der an dem Auftrag des Materialverbunds beteiligten Abschnitte der Breitschlitzdüse festlegbar sind.

Bei der erfindungsgemäßen, mehrere Koextrusionskammern umfassenden Koextrusionsdüse ist vorgesehen, dass jede Koextrusionskammer des Koextrusionskanals der Koextrusionsdüse jeweils mit einer ersten Fördereinrichtung für das erste Extrudat und einer zweiten Fördereinrichtung für das zweite Extrudat fluidisch verbunden ist, wobei sämtliche Fördereinrichtungen Bestandteil der Koextrusionsdüse sind. Sofern für diese mehreren Fördereinrichtungen jeweils eine Pumpe vorgesehen ist, können die mehreren Pumpen als mehrstufige Pumpen gebildet sein, die wahlweise einem Antrieb zugeordnet sind. Es kann aber auch vorgesehen sein, jede Fördereinrichtung mit einer Pumpe und einem Pumpenantrieb zu versehen. Es kann die Fördermenge des ersten Extrudates und/oder des zweiten Extrudates durch jede der Koextrusionskammem gesteuert werden. Im Hinblick auf die Konfiguration eines mittels der erfindungsgemäßen Koextrusionsdüse aufzutragenden Materialauftrags bedeutet dies, dass die Eigenschaften des gesamten Auftrags abschnittsweise variierbar sind, indem die Fördermenge des betreffenden Extrudates durch die an dem jeweiligen Abschnitt beteiligte Koextrusionskammer verändert wird. Die Veränderung der Fördermengen durch die erfindungsgemäße Vorrichtung erfolgt derart verzögerungsfrei, dass die abschnittsweise Variierung und/oder Unterbrechung der Förderung mit sehr hoher Genauigkeit erfolgt, wobei eine hohe Trennschärfe zwischen den aufgetragenen Abschnitten erzielbar ist.

Beispielsweise kann durch Zu- und/oder Abschalten einer oder mehrerer der Fördereinrichtungen, die einer oder mehreren bezogen auf die Breite des Auslasses randseitig angeordneten Koextrusionskammern fluidisch zugeordnet sind, die Verbundbreite des Materialverbunds verändert werden. Durch Zu- und/oder Abschalten sämtlicher Fördereinrichtungen kann ebenso die Verbundlänge des Materialverbunds veränderbar werden. Wird beispielsweise alternativ die Förderung des ersten und des zweiten Extrudates einer im Wesentlichen mittig angeordneten Koextrusionskammer gestoppt oder unterbrochen, führt dies im Ergebnis zu einem Materialauftrag, der zwei bandartige Abschnitte aufweist, die benachbart zueinander auf einer Auftragfläche angeordnet sind. Durch ein entsprechendes Zu- und Abschalten der Fördereinrichtungen einzelner Koextrusionskammern kann eine Vielzahl regelmäßigen oder unregelmäßigen Auftragmustem des Materialauftrags gebildet werden. Der Auftrag kann insbesondere intermittierend erfolgen, d. h. mit bereichs- oder abschnittweise vorgesehenen Auftragunterbrechungen oder mit zeitweisen Unterbrechungen der Fördermenge des Extrudates oder der Extrudate. Bereichsweise Unterbrechungen betreffen beispielsweise solche Unterbrechungen die sich über einen Bereich der Verbundlänge erstrecken deren Breite bevorzugt der gesamten oder nahezu der gesamten Verbundbreite entspricht.

Die Querverteilungsgenauigkeit, d. h. die Genauigkeit, mit der die Verbundbreite des Materialverbunds respektive die Schichtbreite der Extrudatschichten oder Abschnitte der Schichten erzielt wird, kann im Wesentlichen durch die Fördereinrichtung(en) der Düse erreicht werden. Dadurch werden die Anforderungen an den apparativen Herstellungsaufwand der Düse oder einzelner Düsenkomponenten erheblich reduziert. Analog dazu ergibt sich eine hohe Längsverteilungsgenauigkeit, die insbesondere die Verbundlänge betrifft.

Wahlweise kann vorgesehen sein, dass in der Koextrusionsdüse, insbesondere im Bereich des Koextrusionskanals, ein oder mehrere bewegliche Schieber angeordnet sind, mit denen etwa zur Vorab-Justage die Breite zumindest eines an dem Auftrag beteiligten Abschnitts des Auslasses veränderbar ist. Dadurch wird eine stufenlose Verstellbarkeit respektive Veränderbarkeit der Breite des an dem Auftrag beteiligten Abschnitts des Düsenschlitzes und/oder zumindest eines Abschnitts des Materialauftrags erreicht.

Zusätzlich ermöglicht die Ausgestaltung der Koextrusionsdüse, bei der jeder Koextrusionskammer des Koextrusionskanals eine erste und eine zweite Fördereinrichtung für das erste und das zweite Extrudat zugeordnet sind, dass die Schichtkonfiguration des Materialauftrags bezogen auf einzelne Schichten veränderbar ist. Wird beispielsweise die Fördermenge des ersten Extrudates durch eine im wesentlichen mittig angeordnete Koextrusionskammer des Koextrusionskanals zeitweise reduziert oder unterbrochen, führt dies im Ergebnis dazu, dass die erste Schicht des Materialauftrags im Bereich der Auftragmitte eine Schwächung respektive eine Unterbrechung aufweist. Diese Schwächung kann beispielsweise den Zweck haben, den Materialverbund im Bereich der Schwächung mit einer Sollbruch- oder Sollknickstelle auszustatten, oder - sofern es sich um Klebstoff bildende Extrudate handelt - die klebende Eigenschaft gemäß dem Beispiel im mittleren Bereich des gesamten Materialauftrags zu unterbinden. Alternativ sind auch hier eine Vielzahl von Mustern und Schichtkonfigurationen allein durch Variation der Fördermenge respektive der Fördergeschwindigkeit - etwa durch Variation der Pumpendrehzahl und Betriebsstellung des Schaltelementes - eines oder beider Extrudate durch eine oder mehrere der beteiligten Koextrusionskammern denkbar.

Sofern der erste und der zweite Flächenbereich des flächigen Materialverbunds, der durch die erfindungsgemäße Koextrusionsdüse auftragbar ist, jeweils eine Flächenbereichsbreite und eine Flächenbereichslänge aufweisen, die eine Ebene parallel zu einer Auftragfläche aufspannen, und sofern der erste und der zweite Flächenbereich jeweils eine sich im wesentlichen zur Auftragfläche senkrecht erstreckende Flächenbereichshöhe aufweisen, kann es zweckmäßig sein, dass jeder der Fördereinrichtungen eine Steuereinrichtung zugeordnet ist. Dadurch wird jede der Fördereinrichtungen getrennt und vorzugsweise voneinander unabhängig steuerbar, insbesondere Steuer- und regelbar. Die Flächenbereichsbreite, die Flächenbereichslänge und/oder die Flächenbereichshöhe einer oder mehrerer der an dem Materialauftrag beteiligten Flächenbereiche ist dadurch insbesondere abschnittsweise respektive bereichsweise veränderbar. Die Steuereinrichtungen können wahlweise zu einer zentralen Steuereinheit führen, an der sämtliche Parameter im Hinblick auf die Verbundlänge, Verbundweite und Verbundhöhe des gesamten Materialverbundes sowie die Flächenbereichslänge, Flächenbereichsbreite und Flächenbereichshöhe (Flächenbereichsdicke) jedes der beteiligten Flächenbereiche wählbar ist, wobei ein Wechsel der Parameter während des Auftrags möglich ist. Ein im Hinblick auf die Fertigung unterschiedlicher Verbundmaterialien, oder die Fertigung von einem Materialverbund mit sich räumlich ändernder Flächenbereichs- oder Schichtstruktur ist eine konstruktive Umgestaltung, ein Umrüsten bzw. ein Auswechseln der Koextrusionsdüse nicht erforderlich. Dadurch wird der apparative Aufwand zur Erzeugung flächiger, mehrschichtiger Verbundmaterialien beträchtlich reduziert, zugleich wird die Vielfalt der funktionalen Eigenschaften des herzustellenden Verbundmaterials deutlich verbessert.

Zur Verflüssigung der Extrudate kann vorgesehen sein, dass die erfindungsgemäße Koextrusionsdüse eine Heizvorrichtung umfasst, welche dem ersten Einlass und/oder dem zweiten Einlass zugeordnet sein kann. Die Heizvorrichtung kann bevorzugt elektrisch betrieben werden, und beispielsweise als Heizmanschette gebildet sein, die um eine Zuleitung zu dem Einlass angeordnet ist. Die Heizmanschette kann auch um eine oder mehrere der Pumpen der Fördereinrichtung angeordnet sein. Die an die Extrudate abgegebene Heizleistung korreliert mit der Temperatur der Extrudate und kann ein weiterer Parameter sein, der auf die Auftrageigenschaften der Koextrusionsdüse Einfluss hat. So kann beispielsweise eine Erhöhung der Heizleistung dazu führen, dass das betroffene Extrudat mit einer geringeren Viskosität und somit mit höherer Geschwindigkeit durch die Koextrusionsdüse förderbar ist.

Wahlweise oder zusätzlich kann der Auslass der Koextrusionsdüse heizbar sein. Besonders vorteilhaft ist es, wenn der Auslass und/oder der Koextrusionskanal der Koextrusionsdüse heizbar sind.

Es kann zweckmäßig sein, wenn die Koextrusionsdüse zumindest einen Drucksensor umfasst, der den Druck respektive den Vordruck zumindest eines Extrudates überwacht. Wahlweise kann der Drucksensor mit zumindest einem Extruder zum Bestimmen des Vordruckes verbunden sein. Der Drucksensor kann zur Überwachung des Druckes zumindest eines Extrudats alternativ der Koextrusionskammer zugeordnet sein und/oder einem der Einlässe.

Die vorliegende Offenbarung betrifft ferner ein (nicht beanspruchtes) Verfahren. Das Verfahren betrifft demnach das Auftragen und/oder Herstellen eines flächigen, mehrschichtigen Materialverbunds auf eine bewegte Transportfläche einer Transporteinrichtung oder auf ein bewegtes Substrat. Dabei wird der Materialverbund aus einem Materialauftrag gebildet, der einen ersten Flächenbereich und zumindest einen zweiten Flächenbereich aufweist. Der Materialverbund weist bevorzugt eine Verbundbreite und eine Verbundlänge auf, die eine Ebene aufspannen, welche zu einer Auftragfläche im Wesentlichen parallel verläuft. Der Materialverbund hat eine Verbundhöhe, welche im Wesentlichen senkrecht zu der Auftragfläche verläuft. Jeder der an den Materialauftrag beteiligten Flächenbereiche des Materialverbunds ist jeweils durch eine Flächenbereichslänge, eine Flächenbereichsbreite und eine Flächenbereichshöhe charakterisiert.

Insbesondere sieht das Verfahren vor, dass der Materialverbund aus einem den ersten Flächenbereich bildenden ersten Extrudat und zumindest einem den zweiten Flächenbereich bildenden zweiten Extrudat koextrudiert wird, wobei die Flächenbereichsbreiten und/oder die Flächenbereichslängen und/oder die Flächenbereichshöhen des ersten und/oder des zweiten Flächenbereichs und/oder die Verbundbreite und/oder die Verbundlänge und/oder die Verbundhöhe des Material-verbunds während der Koextrusion dadurch verändert werden, dass die zugeführte Menge des ersten und/oder des zweiten Extrudats zumindest abschnittsweise vorzugsweise steuerbar verändert werden. Es können dabei insbesondere zumindest abschnittsweise und/oder zumindest zeitweise die zugeführte Masse und/oder die zugeführte Masse pro Zeit und/oder das zugeführte Volumen und/oder das zugeführte Volumen pro Zeit des ersten und/oder des zweiten Extrudats vorzugsweise steuerbar verändert werden.

Durch das Verfahren wird vermieden, an dem Verfahren beteiligte Vorrichtungskomponenten umzurüsten oder auszutauschen. Vielmehr gestattet das Verfahren, die Parameter der Koextrusion so zu steuern, dass die verfahrensgemäß erzeugten Verbundmaterialien bestimmungsgemäße Eigenschaften, bestimmungsgemäße Funktionen und bestimmungsgemäße Wirkungen aufweisen. Die bestimmungsgemäßen Eigenschaften, Funktionen und Wirkungen der aufzutragenden Verbundmaterialien werden dabei im Wesentlichen durch die Zusammensetzung und durch die Abmessungen des Auftrags sowie durch die Abmessungen der am Auftrag beteiligten Flächenbereiche bestimmt. Soll beispielsweise im Anschluss an die Herstellung eines vergleichsweise dünnen Materialverbunds ein verglichen dazu dicker oder zumindest dickerer Materialverbund hergestellt werden, so bedarf dies lediglich der steuerbaren Änderung der an der Koextrusion beteiligten Einstellungen und Verfahrensparameter. Eine konstruktive Umgestaltung der am Auftrag beteiligten Vorrichtungskomponenten oder ein Austausch beteiligter Komponenten entfällt damit.

Die vorliegende Offenbarung betrifft ferner ein weiteres (nicht beanspruchtes) Verfahren. Dabei wird der aus zwei Extrudaten gebildete Materialverbund so koextrudiert, dass in einer Koextrusionsdüse mit einem Koextrusionskanal das zweite Extrudat gegen die Extrudatoberfläche des in den Koextrusionskanal hineingeförderten ersten Extrudats gefördert wird. Durch die Förderung des zweiten Extrudats gegen die Oberfläche des ersten Extrudates wird das zweite Extrudat haftend an das erste Extrudat angelegt. Dies ist insbesondere dann zweckmäßig, wenn der aus dem ersten Extrudat gebildete erste Flächenbereich dicker als der aus dem zweiten Extrudat gebildete zweite Flächenbereich des Materialverbundes ist. Indem der zweite (dünnere) Flächenbereich gegen den ersten (dickeren) gefahren wird, beaufschlagt der erste Flächenbereich den zweiten mit der Fördergeschwindigkeit des ersten Flächenbereichs, so dass es für den zweiten Flächenbereich ausreichend ist, wenn dieser bis zu der Stelle gefördert wird, wo die beiden Flächenbereiche insbesondere haftend aneinandergelegt werden.

Beide Verfahren gestatten das Herstellen eines Materialverbunds, der "offline" ohne ein Trägermedium verwendet werden kann. "Offline" meint in diesem Zusammenhang, dass zunächst der Materialverbund hergestellt wird, bevor dieser außerhalb des Herstellungsverfahrens weiterverwendet wird, wobei es für die Weiterverwendung nicht vorgesehen ist, dass der Materialverbund auf einem Trägermedium angeordnet wird.

Es kann zweckmäßig sein, wenn die Verfahren so ausgestaltet sind, dass die Flächenbereichsbreite und/oder die Flächenbereichslänge und/oder die Flächenbereichshöhe einer der Flächenbereiche verändert wird, wobei die Flächenbereichsbreite, die Flächenbereichslänge und die Flächenbereichshöhe zumindest einer der anderen Flächenbereiche beibehalten werden. Die mit diesem Verfahren erzeugten Verbundmaterialien zeichnen sich dadurch aus, dass beispielsweise der zweite Flächenbereich über die gesamten Abmessungen des Materialauftrags zur Herstellung eines Materialverbunds konstante Maße aufweist, wohingegen der auf dem ersten Flächenbereich aufgetragene zweite Flächenbereich entweder lediglich abschnittsweise aufgetragen wird oder bereichsweise geschwächt wird. Umfasst einer oder beide der beteiligten Flächenbereiche beispielsweise einen Heißschmelz-Klebstoff, kann dies im Ergebnis dazu führen, dass der Materialverbund bedingt durch den konstant aufgetragenen ersten Flächenbereich durchgängig schwach klebende Eigenschaften hat wohingegen diejenigen Bereiche, an denen der zweite Flächenbereich aufgetragen ist, stark klebende Eigenschaften haben.

Insbesondere wenn es sich bei den an dem Materialauftrag beteiligten Extrudaten um Heißschmelz-Klebstoffe handelt, kann es zweckmäßig sein, wenn die erfindungsgemäßen Verfahren so ausgestaltet sind, dass die Transporteinrichtung und/oder die Transportfläche zumindest abschnittsweise gekühlt wird. Durch das Kühlen der Transportfläche wird der Heißschmelz-Kleber zumindest teilweise ausgehärtet und damit gegebenenfalls inaktiv, wodurch das Ablösen des Material-verbunds von der Transportfläche erleichtert wird.

Wahlweise kann der Materialverbund dadurch mit einem Substrat versehen werden, dass das Koextrudat auf ein auf der Transporteinrichtung geführtes, entfernbares Substrat aufgetragen wird. So wird der Materialverbund "inline", d. h. während des Herstellens mit dem Substrat insbesondere haftend verbunden, ein nachträgliches Anordnen des Materialverbunds auf einem Substrat oder Träger wird dadurch entbehrlich.

Die vorliegende Offenbarung betrifft ferner einen (nicht beanspruchten) flächigen Materialverbund. Der flächige Materialverbund besteht aus einem ersten Flächenbereich und zumindest einem auf dem ersten Flächenbereich angeordneten zweiten Flächenbereich. Der erste Flächenbereich ist aus einem ersten Extrudat gebildet und der zweite Flächenbereich aus einem zweiten Extrudat, so dass der Flächenbereichverbund aus dem ersten und dem zweiten Flächenbereich aus einem Koextrudat gebildet ist, welches bevorzugt mit einer erfindungsgemäßen Koextrusionsdüse herstellbar ist. Erfindungsgemäß umfasst der flächige Material-verbund einen zweiten Flächenbereich, der aus einer Funktionsschicht wie etwa einer Klebstoffschicht gebildet ist sowie einen ersten Flächenbereich, der aus einer Wirkungsschicht gebildet ist. Die koextrudierten Flächenbereiche des erfindungsgemäßen Materialverbunds lassen sich mit einem deutlich geringeren apparativen Aufwand als bisher üblich herstellen. So bedarf es zur Bildung unterschiedlicher Verbundmaterialien, die sich insbesondere in ihren Bereichs-Schichtstrukturen unterscheiden, keines Austausches erforderlicher apparativer Komponenten oder keiner apparativen Umrüstung.

Die Wirkungsschicht kann wahlweise klebende Eigenschaften haben sowie volumenfüllende, akustisch dämpfende und/oder mechanisch dämpfende Eigenschaften. Bei der Wirkungsschicht kann es sich alternativ auch um eine Flammschutzschicht mit Flammschutzeigenschaften oder um eine Barriereschicht mit einer Barriereeigenschaft handeln. Die Anordnung der Funktions- oder Klebstoffschicht auf einer Wirkungsschicht führt zu einem flächigen Materialverbund, bei dem die Funktionsschicht deutlich dünner sein kann als die Wirkungsschicht.

Wahlweise kann auch vorgesehen sein, dass die Flächenbereichsbreite und/oder die Flächenbereichslänge und/oder die Flächenbereichshöhe des ersten und/oder des zweiten Flächenbereichs über der Verbundlänge und/oder der Verbundbreite und/oder der Verbundhöhe des Materialverbundes zumindest abschnittsweise variiert. Dabei werden der erste und der zweite Flächenbereich jeweils durch die Flächenbereichsbreite, die Flächenbereichslänge und die Flächenbereichshöhe charakterisiert.

Der erste und der zweite Flächenbereich des Materialverbunds können aus unterschiedlichen Werkstoffen gebildet sein, insbesondere aus unterschiedlichen Klebstoffen. Vorzugsweise können die erste und die zweite Schicht aus reaktivierbaren Heißschmelz-Klebstoffen gebildet sein, die beispielsweise Polyurethan (PU), Ethylen-Vinyl-Acetat (EVA) oder ein UV-Acrylat umfassen.

Bevorzugt unterstützt der Wirkungsbereich die Eigenschaft des Funktionsbereichs, wobei insbesondere die klebende Eigenschaft des Funktionsbereichs durch den Wirkungsbereich unterstützt wird. Die Unterstützung kann mechanischer oder chemischer Art sein. Beispielsweise kann der Wirkungsbereich Oberflächenunebenheiten ausgleichen, wodurch die Haftung des Funktionsbereichs verbessert und somit unterstützt wird.

Der erste und der zweite Flächenbereich können dabei die gleiche oder nahezu die gleiche Flächenbereichshöhe aufweisen. Wahlweise kann der erste Flächenbereich eine andere Flächenbereichshöhe aufweisen als der zweite Flächenbereich, wobei der erste Flächenbereich vorzugsweise dicker ist als der zweite Flächenbereich. Durch die dickere Ausgestaltung des ersten Flächenbereiches vermag dieser besser in Oberflächenunebenheiten einzudringen, wodurch die effektive Kontaktfläche zwischen dem Materialverbund und der zu beklebenden Oberfläche vergrößert wird. Dies verbessert die Haftung.

Im Hinblick auf eine Weiterverarbeitung des Materialverbunds kann vorgesehen sein, dass der zweite Flächenbereich und der auf dem zweiten Flächenbereich angeordnete erste Flächenbereich auf einem Substrat angeordnet sind, welches wahlweise größer und/oder dicker (höher) sein kann als der Material-verbund. Das Substrat kann dabei aus einem organischen oder aus einem anorganischen Werkstoff gebildet sein. Es sind auch Kombinationen aus einem organischen und einem anorganischem Werkstoff denkbar. Vorzugsweise ist das Substrat aus einem Kunststoff oder einer Kunststofffolie gebildet, die beispielsweise Polyethylen (PE) umfasst. Denkbar sind auch Substrate, die Papier, Karton, Faserwerkstoffe oder Kombinationen daraus umfassen.

Vorteilhaft ist, wenn der erste und/oder der zweite Flächenbereich aus einem Heißschmelz-Klebstoff gebildet ist, welcher vorzugsweise chemisch oder strahlenvernetzbar, reaktivierbar, dauerhaft klebrig und/oder wasserlöslich ist.

Eine alternative Ausgestaltung des Materialverbunds umfasst ein Substrat oder einen Trägerwerkstoff, auf welchem der erste Flächenbereich und der über dem ersten Flächenbereich angeordnet sind. Das Substrat kann aus einem organischen oder einem anorganischen Werkstoff oder einer Kombination daraus gebildet sein, insbesondere aus einem Kunststoff, einer Kunststofffolie, einem Papier, einem Karton, einem Faserwerkstoff oder Kombinationen daraus.

Besonders vorteilhaft ist der Materialverbund, wenn der erste und der zweite Flächenbereich zwischen dem Substrat und einem dritten Flächenbereich angeordnet sind, welcher vorzugsweise auf dem zweiten Flächenbereich zumindest abschnittsweise angeordnet ist. Damit umfasst der Materialverbund vier Schichten oder Lagen, von denen die vierte Schicht respektive der dritte Flächenbereich beispielsweise aus einem Kunststoff oder einem Faserwerkstoff gebildet sein kann.

Die vorbenannten sowie die beanspruchten und in den Ausführungsbeispielen beschriebenen, erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen, sowie aus der nachfolgenden Beschreibung und der zugehörigen Zeichnung, in der - beispielhaft - ein Ausführungsbeispiel einer Vorrichtung zur Herstellung und/oder zum Auftragen eines flächigen Material-verbunds, einer Koextrusionsdüse zum Auftrag des flächigen Materialverbunds sowie eines flächigen Materialverbunds dargestellt sind. Auch einzelne Merkmale der Ansprüche oder der Ausführungsformen können mit anderen Merkmalen anderer Ansprüche und Ausführungsformen kombiniert werden.

### KURZBESCHREIBUNG DER FIGUREN

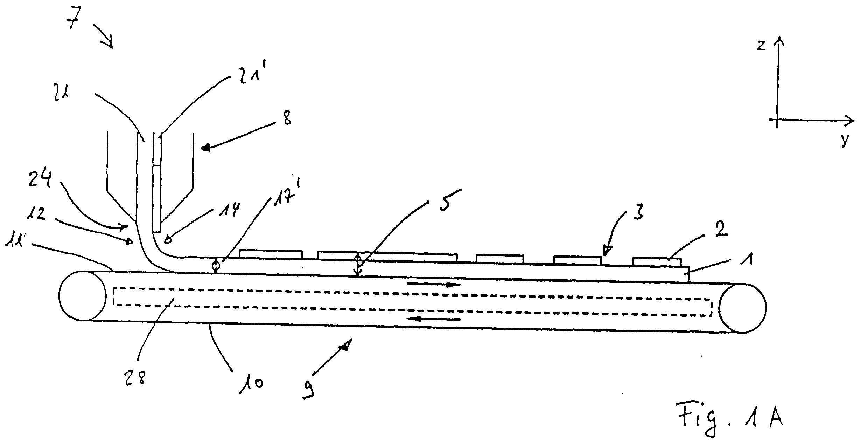

In der Zeichnung zeigen
- Figur 1A: eine Vorrichtung zum Herstellen und/oder Auftragen eines flächigen Materialverbunds 3 in schematischer, seitlicher Ansicht;
- Figur 1: B eine Auftrageinrichtung in seitlicher Ansicht;
- Figur 2: eine Aufsicht auf eine Vorrichtung gemäß Figur 1 (schematisch);
- Figur 3: eine schematische Darstellung einer Koextrusionsdüse 8 zum Auftragen eines Materialverbunds 3;
- Figur 4: eine Detailansicht einer Koextrusionsdüse 3 in schematischer Schnittdarstellung;
- Figur 5: eine perspektivische Darstellung eines Materialverbunds 3 (schematisch);
- Figur 6: einen Materialverbund 3 in Vertikalschnitt (schematisch);
- Figur 7: eine alternative Ausgestaltung eines Materialverbunds 3 in Vertikalschnitt (schematisch);
- Figur 8: eine Ausgestaltung des Materialverbunds 3 auf einem Substrat 13 in Vertikalschnitt (schematisch);
- Figur 9: eine schematische Aufsicht auf einen Materialverbund 3 und
- Figur 10: eine vierlagige Ausgestaltung des Materialverbunds 3 (schematisch).

### DETAILLIERTE BESCHREIBUNG VON AUSFÜHRUNGSBEISPIELEN

Der Fig. 1A kann schematisch eine Vorrichtung zum Herstellen und/oder Auftragen eines aus zumindest zwei Flächenbereich 1, 2 gebildeten, im Wesentlichen flächigen Materialverbunds 3 vorgebbarer Verbundbreite 4, vorgebbarer Verbundhöhe 5 und/oder vorgebbarer Verbundlänge 6 entnommen werden. Die Flächenbereiche 1, 2 bilden jeweils eine Schicht 1, 2 des Materialverbunds 3. Die Vorrichtung weist eine Auftrageinrichtung 7 auf, welche eine Auftragdüse 8 umfasst. Unterhalb der Auftragdüse 8, welche als Koextrusionsdüse gebildet ist, ist eine Transporteinrichtung 9 angeordnet. Die Transporteinrichtung 9 ist als Transportband 10 gebildet, welches auf der Oberseite des Bands 10 eine Transportfläche 11 aufweist. Durch die Transporteinrichtung 9 ist die Transportfläche 11 unter der räumlich an einer festen Stelle angeordneten Koextrusionsdüse 8 in Transportrichtung y bewegbar. Der aus der Koextrusionsdüse 8 in nahezu vertikaler Richtung z verlaufende Gießvorhang 12 ist auf die Transporteinrichtung 9 im Bereich der Transportfläche 11 auftragbar. Vorzugsweise ist der Materialverbund 3 auf ein Substrat 13 auftragbar, welches auf der Transportfläche 11 aufliegt und mit der Transporteinrichtung 9 in Transportrichtung y förderbar ist.

Das Transportband 10 gemäß Fig. 1A kann als Kühlband gebildet sein, welches eine Kühleinrichtung 28 umfasst. Dadurch wird das aus der Koextrusionsdüse 8 austretende, in der Regel heiße, zäh- oder schmelzflüssige Koextrudat 14 auf der Transporteinrichtung 9 gekühlt, wodurch der Materialverbund 3 zumindest teilweise aushärtet bzw. seine Viskosität ändert.

Durch die Vorrichtung gemäß Fig. 1A sind die Schichtbreite 15 und/oder die Schichtlänge 16 und/oder die Schichthöhe 17 zumindest einer der Schichten 1, 2 respektive Flächenbereiche 1, 2 des Materialverbunds 3 abschnittsweise einstellbar. Dies erfolgt durch Variation der Koextrusionsparameter innerhalb der Koextrusionsdüse 8.

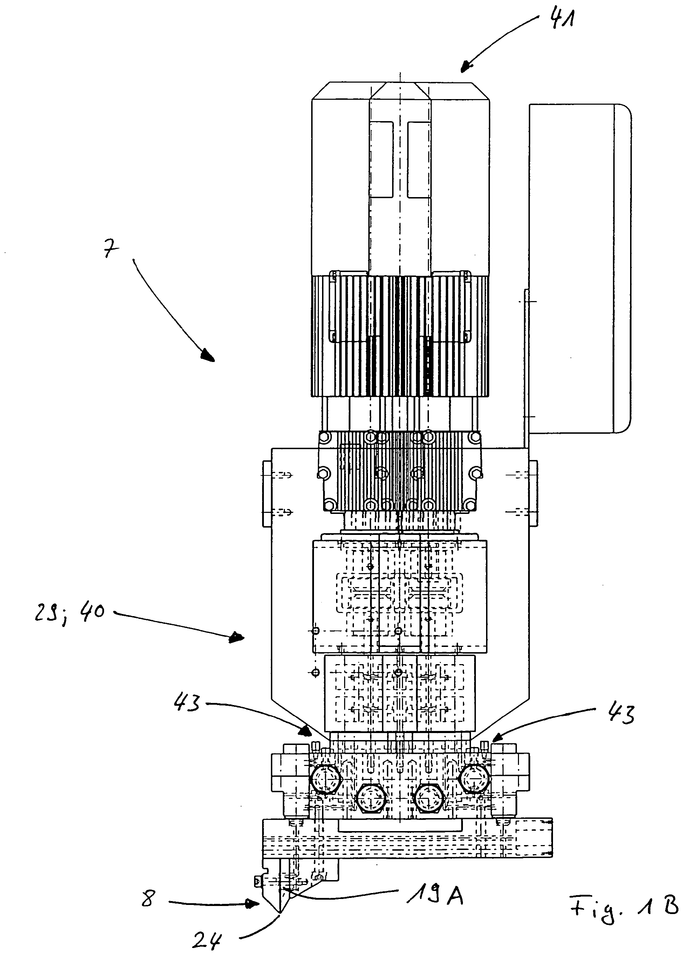

Eine seitliche Ansicht einer Auftrageinrichtung 7 mit einer Koextrusions-Breitschlitzdüse 8 kann der Fig. 1B entnommen werden. Mit der Auftrageinrichtung 7 gemäß der Figuren 1A und 1B können insbesondere die Flächenbereichsbreite 15 und die Flächenbereichslänge 16 zumindest eines Flächenbereichs (1 und/oder 2) des Materialverbunds 3 gemäß dem jeweiligen Bedarf variiert werden.

Dazu wird zumindest ein Extrudat mittels mehrerer, an einem (Pumpen-)Block 40 angeordneter Fördereinrichtungen respektive Dosierpumpen in diejenigen Koextrusionskammern (19A bis 19F) gefördert, die an dem Auftrag des Materialverbunds 3 auf das Substrat 13 beteiligt sind. Der Pumpenblock 40 wird gemäß Fig. 1B von einem oder mehreren Antrieben 41 angetrieben. Den Koextrusionskammern vorgeschaltet sind Zirkulationsmodule 43, die mittels fluidischen Schaltelementen wie etwa Ventilen so geschaltet werden können, dass ein Extrudat in der Auftrageinrichtung 7 respektive in der Fördereinrichtung 22 zirkulieren kann. Das Zirkulieren des im Normalbetrieb erhitzten Extrudats verhindert ein Verkleben der Leitungen und Kanäle und es wird erreicht, dass das Extrudat stets förderbar ist. Kanäle und Leitung sind in der Fig. 1B durch strichlierte Linien schematisch angedeutet.

Wird eines der Zirkulationsmodule 43, welches je einer Koextrusionskammer (19A bis 19F) zugeordnet ist, so geschaltet, dass das oder die Extrudate zirkulieren, wird das zirkulierende Extrudat nicht in die Koextrusionskammer gefördert. Das Extrudat wird zurück in die Pumpen gefördert und zirkuliert in der Auftrageinrichtung 7. So wird der Auftrag des zirkulierenden Extrudates im Bereich der zugeordneten Koextrusionskammer unterbrochen. Demnach erfolgt eine Auftragunterbrechung zur Variation von Flächenbereichsbreite 15 und/oder Flächenbereichslänge 16 durch ein fluidisches Zusammenwirken des Pumpenblocks 40 mit den Zirkulationsmodulen 43 respektive mittels eines bedarfsgemäßen Schaltens des fluidischen Schaltelements in einzelnen oder mehreren Zirkulationsmodulen 43. Wird ein Zirkulationsmodul 43 so geschaltet, dass das Extrudat nicht zirkuliert sondern zu dem Auslass 24 der Auftrageinrichtung 7 gefördert wird, kommt es zu einem Auftrag des Extrudats im Bereich der Koextrusionskammer, welche dem Zirkulationsmodul 43 fluidisch zugeordnet ist.

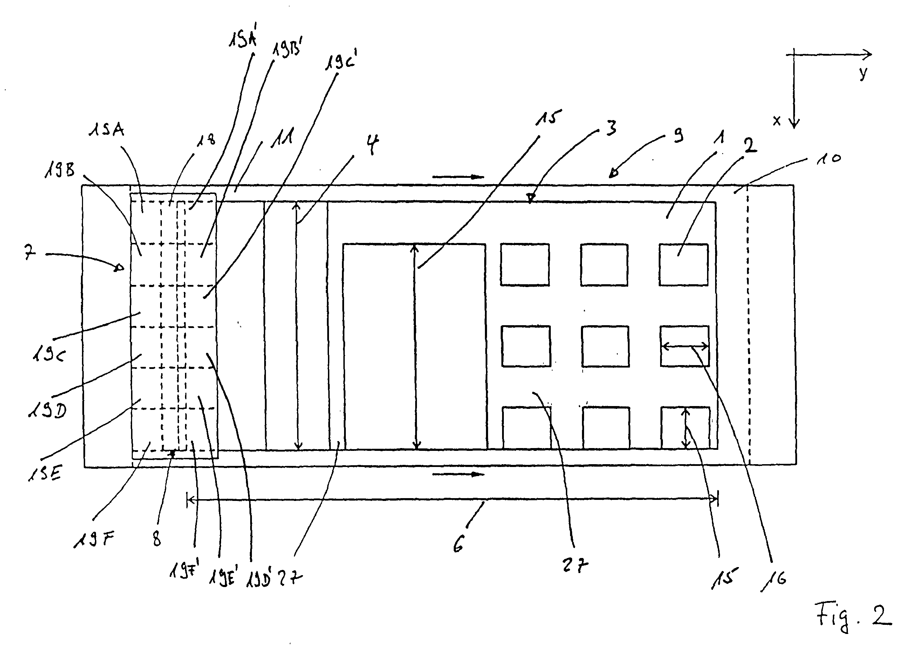

Eine Aufsicht auf eine Vorrichtung zum Herstellen und/oder Auftragen eines aus zumindest zwei Schichten 1, 2 gebildeten, im Wesentlichen flächigen Materialverbunds 3 vorgebbarer Verbundbreite 4, vorgebbarer Verbundhöhe 5 und/oder vorgebbarer Verbundlänge 6 kann der Fig. 2 schematisch entnommen werden. Dort ist auch zu erkennen, dass die zum Auftragen verwendete Koextrusionsdüse 8 als Breitschlitzdüse gebildet ist, deren Düsenschlitzlänge nahezu die maximale Verbundbreite 4 bestimmt. Die Transportrichtung y wird dabei durch die Transporteinrichtung 9 festgelegt, wobei die Transportrichtung y zur Verbundlänge 6 im Wesentlichen parallel verläuft und zur Verbundbreite 4 und/oder zur Verbundhöhe 5 im Wesentlichen senkrecht. Mit der Vorrichtung gemäß Fig. 2 ist es möglich, die Verbundbreite 4, die Verbundlänge 6 und/oder die Verbundhöhe 5 einzustellen. Dies geschieht dadurch, dass die Koextrustionsdüse 8 einen Koextrusionskanal 18 mit mehreren Koextrusionskammern 19A bis 19F umfasst. Jede der Koextrusionskammern 19A bis 19F verfügt über einen ersten Einlass 20 für das die erste Schicht 1 bildende erste Extrudat 21 und einen zweiten Einlass 20' für das die zweite Schicht 2 bildende zweite Extrudat 21'. Jedem der Einlässe 20, 20' jeder der Koextrusionskammern 19A bis 19F ist gemäß Fig. 2 eine Fördervorrichtung 22 fluidisch zugeordnet. Durch die fluidische Zuordnung der Fördereinrichtungen 22 zu jedem Einlass 20, 20' einer jeden Kammer 19A bis 19F sind die Schichtstrukturparameter des gesamten Materialauftrags 3 variabel einstellbar. So kann etwa durch gezieltes Ansteuern einzelner Fördereinrichtungen 22 die Zufuhr des ersten und/oder wahlweise des zweiten Extrudats 21, 21' zeitabhängig gesteuert werden, wodurch im Ergebnis ein Materialauftrag generiert wird, der abschnittsweise über unterschiedliche Flächenbereichs- respektive Flächenbereichsparameter verfügt. Zu den Flächenbereichsparametern zählen die Flächenbereichsdicke (Schichthöhe 17) ebenso wie die Flächenbereichsbreite 15 und die Flächenbereichslänge 16.

Gemäß Fig. 2 ist exemplarisch eine Materialverbundstruktur dargestellt, bei der in unregelmäßigen Abständen bezogen auf die Verbundbreite 4 und auf die Verbundlänge 6 Abschnitte 37 mit einer ersten und einer zweiten Schicht 1, 2, sowie Abschnitte mit nur einer ersten Schicht 1 gebildet sind.

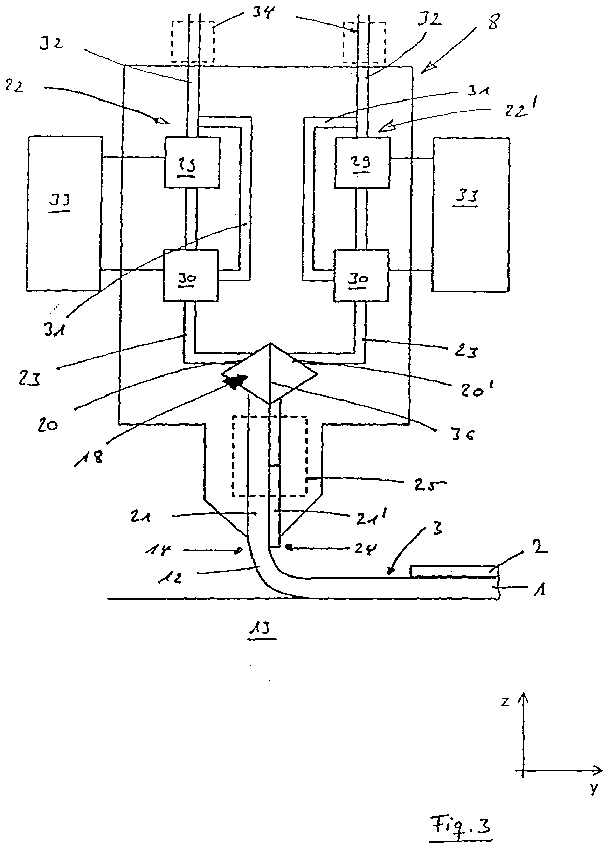

Eine schematische Darstellung einer Auftragdüse 8 in vertikaler Schnittansicht kann der Fig. 3 entnommen werden. Die dort dargestellte Auftragdüse 8 kann beispielsweise in einer Vorrichtung gemäß den Figuren 1A, 1B oder 2 vorgesehen sein. Sie dient demnach der Erzeugung und/oder des Auftrags eines flächigen, mehrschichtigen aus einem Koextrudat 14 gebildeten Materialauftrags 3, vorzugsweise auf eine Transportfläche 11 einer Transporteinrichtung 9 oder auf ein Substrat 13. Der Materialauftrag ist gemäß Fig. 3 aus einem ersten Extrudat 21 und aus einem zweiten Extrudat 21' gebildet. Das erste Extrudat 21 bildet den ersten Flächenbereich respektive die erste Schicht 1 des Verbundmaterials 3, das zweite Extrudat 21' den zweiten Flächenbereich respektive die zweite Schicht 2. Die Auftragdüse 8 gemäß Fig. 3 umfasst einen ersten Einlass 20 für das erste Extrudat 21 und einen zweiten Einlass 20' für das zweite Extrudat 21'. Jeder der Einlässe 20, 20' ist mit einem Kanal oder einer Leitung 23 verbunden. In den Leitungen 23 respektive in der Düse 8 kann ein Extrudatdruck herrschen, der zwischen etwa 10 und etwa 100 bar beträgt. Dabei kann die Temperatur der Extrudate 21, 21' größer als 60° C sein. Insbesondere können die Extrudate 21, 21' Temperaturen aufweisen, die zwischen etwa 100° C und etwa 220° C liegen. An der Unterseite der Koextrusionsdüse 8 ist ein Auslass 24 für das Koextrudat 14 vorgesehen. Dabei ist im Bereich des Auslasses 24 eine Heizung 25 angeordnet, wodurch der Auslass 24 und somit auch das den Auslass 24 verlassende Koextrudat 14 heizbar ist. Durch die Koextrusions-Breitschlitzdüse 8 gemäß Fig. 3 ist die Auftragbreite des den Auslass 24 verlassenden Materialauftrags veränderbar. Die Auftragbreite ist dabei kleiner oder gleich der im Wesentlichen durch die Breite des Auslasses 24 festgelegten maximalen Auftragbreite.

Gemäß Fig. 3 erfolgt der Materialauftrag abschnittsweise, so dass die Abschnitte des Materialauftrags streifenförmige Unterbrechungen 27 aufweisen.

Die Koextrusionsdüse 8 gemäß Fig. 3 umfasst mehrere Fördereinrichtungen 22 zur Förderung der Extrudate 21, 21', welche jeweils mit dem ersten Einlass 20 und dem zweiten Einlass 20' fluidisch verbunden sind. Die Fördereinrichtungen 22 können beispielsweise in einem (in Fig. 3 nicht dargestellten) Block angeordnet sein, wobei jede Fördereinrichtung eine (Dosier-)Pumpe umfassen kann. Der (Pumpen-)Block kann einen gemeinsamen Antrieb 41 umfassen, der jede Dosierpumpe der Fördereinrichtung 22 antreibt. Der Antrieb kann einen oder mehrere Motoren umfassen.

Der erste Einlass 20 und der zweite Einlass 20' münden gemäß Fig. 3 in einen Koextrusionskanal 18, welcher - wie in Fig. 2 dargestellt - in mehrere Koextrusionskammern 19A bis 19F unterteilt sein kann.

Der Fig. 3 kann entnommen werden, dass jede der mit den Einlässen 20, 20' fluidisch verbundenen Fördereinrichtungen 22 eine Pumpe 29, ein als Ventil 30 gebildetes Schaltelement und eine fluidische, die Pumpe 29 umgehende, durch das Ventil 30 schaltbare Rückführung 31 umfasst. Soll kein Extrudat 21, 21' in den Einlass 20, 20' gefördert werden, wird das Ventil 30 so geschaltet, dass das durch die Pumpe 29 geförderte Extrudat 21, 21' über die Rückführung 31 in die an der Pumpe 29 angeschlossene Zuleitung 32 zurückgeführt wird. Somit wird die Förderung des Extrudats 21, 21' kurzgeschlossen, wodurch sowohl die Fördergeschwindigkeit als auch der Förderdruck des zirkulierenden Extrudats im Wesentlichen konstant bleiben. Soll die Förderung des Extrudats fortgesetzt werden, wird das Ventil 30 so geschaltet, dass das Extrudat 21, 21' über die an dem Einlass 20, 20'verbundene Leitung 23 in den Einlass 20, 20' gefördert wird. Das Ventil 30 und die Rückführung 31 können Bestandteile eines Zirkulationsmoduls (43) sein. Jeder Fördereinrichtung 22 kann ein eigenes Zirkulationsmodul 43 zugeordnet sein. Das Zirkulationsmodul 43 vermag eine Unterbrechung des Auftrags des Extrudates (21 oder 21'), wahlweise der Extrudate (21 und 21'), zu bewirken, ohne dass der Betrieb einer oder sämtlicher Pumpen 29 der Fördereinrichtungen 22 unterbrochen werden muss. Dies ist insbesondere dann vorteilhaft, wenn die Pumpen 29 der Fördereinrichtung 22 von einem gemeinsamen Antrieb 41 betätigt werden. Der gemeinsame Antrieb 41 läuft dauerhaft und die Unterbrechung oder (zeitweise) Deaktivierung des Auftrags der Extrudate 21, 21' erfolgt durch Ansteuerung eines oder mehrerer Schaltelemente 30 in einem oder mehreren Zirkulationsmodulen 43, so dass das Extrudat 21, 21' (die Extrudate 21 und/oder 21') nicht durch den Austritt 24 der Auftragdüse 8 gefördert werden, sondern innerhalb der Auftrageinrichtung 7 zirkulieren. Durch Umschalten zwischen Durchfluss des Extrudates (21, 21') und Zirkulieren des Extrudates (21, 21') können beispielsweise die Auftragsbreite, die Auftragslänge und/oder weiter Auftragsparameter verändert werden.

Gemäß der Fig. 3 sind Steuereinrichtungen 33 vorgesehen, mit der jede Fördereinrichtung 22 steuerbar ist. Dadurch können die Fördereinrichtungen 22 abschnittsweise geschaltet und/oder gesteuert werden, wodurch der Materialauftrag bedarfsweise über eine, zwei oder keine Schichten 1, 2 verfügt. Dadurch, dass jede der Fördereinrichtungen 22 getrennt und vorzugsweise voneinander unabhängig steuerbar ist, insbesondere Steuer- und regelbar, sind die Schichtbreite 15, die Schichtlänge 16 und/oder die Schichthöhe 17 einer oder mehrerer Schichten 1, 2 des Materialauftrags veränderbar.

Zur Stabilisierung des Fließverhaltens der Extrudate 21, 21' kann jedem der Einlässe 20, 20' oder wahlweise nur einem Einlass (20 oder 20') eine vorzugsweise elektrische Heizvorrichtung 34 zugeordnet sein.

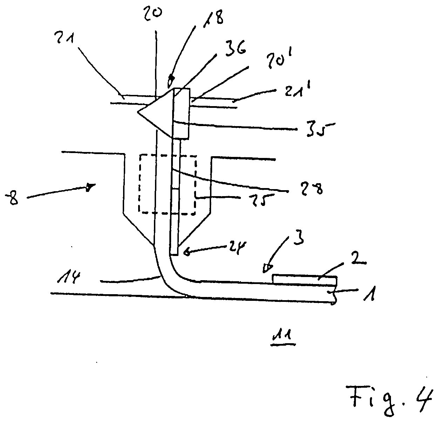

Eine Detailansicht einer alternativen Ausgestaltung einer Koextrusionsdüse 8 gemäß Fig. 3 kann der Fig. 4 entnommen werden. Demnach umfasst die Koextrusionsdüse 8 einen Koextrusionskanal 18, in den der erste und der zweite Einlass 20, 20' münden, und an dem der Auslass 24 der Koextrusionsdüse 8 angeschlossen ist.

Gemäß Fig. 4 mündet der zweite Einlass 20' so in den Koextrusionskanal 18, dass das zweite Extrudat 21' an einer von dem ersten Extrudat 21 gebildeten Extrudatoberfläche 35 anordbar ist. Somit ist es möglich, das zweite Extrudat 21' gegen die in dem Koextrusionskanal 18 gebildete Extrudatoberfläche 35 des ersten Extrudatss 21 zu fahren. Dies ist insbesondere dann zweckmäßig, wenn die von dem ersten Extrudat 21 gebildete Schicht 1 deutlich dicker ist als die von dem zweiten Extrudat 21' gebildete Schicht 2. Indem die dickere, von dem ersten Extrudat 21 gebildete erste Schicht 1 mit einer Fördergeschwindigkeit durch den Koextrusionskanal 18 hindurchgefördert wird, und indem die zweite, dünnere, aus dem zweiten Extrudat 21' gebildete Schicht 2 gegen die erste Schicht 1 gefahren wird, haftet die zweite Schicht 2 an der ersten Schicht 1 an, so dass die zweite Schicht 2 mit der Fördergeschwindigkeit der ersten Schicht 1 beaufschlagt wird.

Der Fig. 4 kann eine Trennwand 36 entnommen werden, welche sich zumindest bereichsweise in den Koextrusionskanal 18 der Koextrusionsdüse 8 erstreckt. Durch die Trennwand 36 können die Fließeigenschaften der Extrudate 21, 21' insoweit unterstützt werden, als eine vorzeitige Durchmischung der Extrudate 21, 21' im Bereich der benachbarten Einlässe 20, 20' vermieden wird.

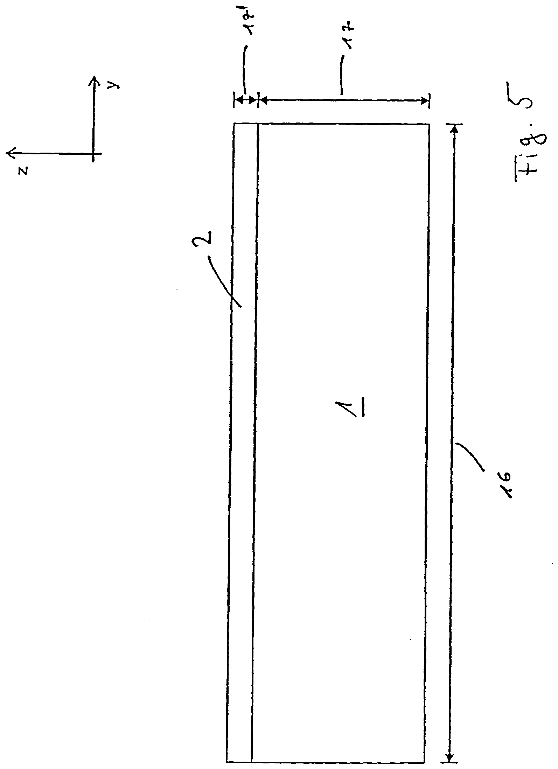

Einen flächigen Materialverbund 3, der mit einer Vorrichtung gemäß der Figuren 1A und 2, respektive mit einer Koextrusionsdüse 8 gemäß der Figuren 3 und 4 hergestellt wurde, kann der Fig. 5 entnommen werden. Dort ist zu sehen, dass der Materialverbund 3 aus einem ersten Flächenbereich 1 und einem auf dem ersten Flächenbereich 1 angeordneten zweiten Flächenbereich 2 besteht, wobei der erste Flächenbereich 1 aus einem ersten Extrudat 21 und der zweite Flächenbereich 2 aus einem zweiten Extrudat 21' gebildet sind. Beide Flächenbereiche 1, 2 sind schichtartig angeordnet. Bei der zweiten Schicht 2 handelt es sich um eine Funktionsschicht, und bei der ersten Schicht 1 handelt es sich um eine Wirkungsschicht, die die Wirkung der Funktionsschicht unterstützt. Bei der Funktionsschicht kann es sich um eine Klebstoffschicht handeln. Diese Klebstoffschicht kann dauerhaft klebend sein oder erst nach einer Reaktivierung, beispielsweise mit einem Lösungsmittel wie etwa Wasser, mit einer beheizten Walze oder mit einem Infrarot-Strahler (IR-Strahler).

Die Wirkungsschicht 1 kann wahlweise klebende Eigenschaften aufweisen. Zusätzlich kann die Wirkungsschicht 1 eine volumenfüllende oder eine akustisch bzw. mechanisch dämpfende Eigenschaft haben. Die Wirkungsschicht 1 kann auch eine Flammschutzeigenschaft oder eine Barriereeigenschaft aufweisen. Sofern die Wirkungsschicht 1 klebende Eigenschaften hat, kann sie die klebenden Eigenschaften der Klebstoff- respektive Funktionsschicht 2 unterstützen. Insbesondere kann dadurch die Haftung der zweiten Schicht 2 auf einem zu beklebenden Werkstoff aber auch auf der ersten Schicht 1 und/oder die Haftung der ersten Schicht 1 auf einem Substrat 13 oder einer beliebigen Oberfläche unterstützt werden.

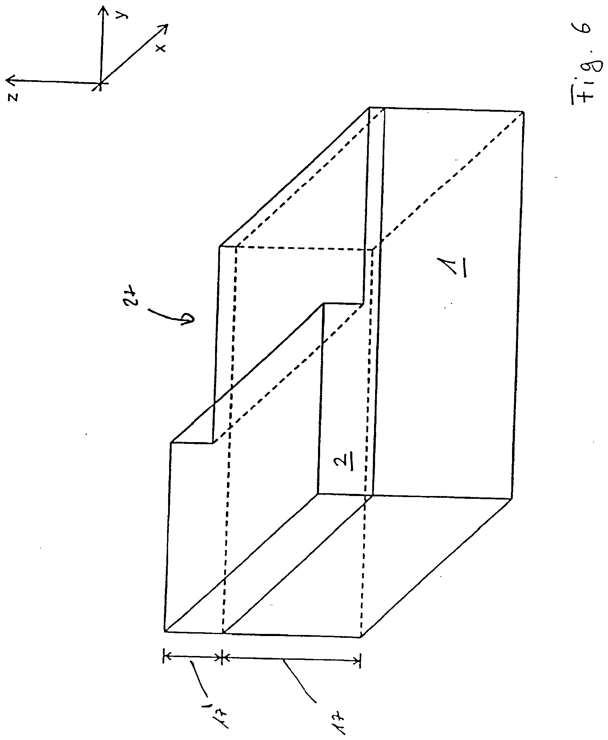

Einen Vertikalschnitt durch einen Materialverbund gemäß Fig. 5 kann der Fig. 6 entnommen werden. Dort ist zu sehen, dass die zweite Schicht 1, welche eine Klebstoffschicht bildet, dünner ist als die erste Schicht 1, welche eine Wirkungs- oder Füllschicht bildet. D. h. die Schichthöhe 17' der zweiten Schicht 2 ist geringer als die Schichthöhe 17 der ersten Schicht 1. Beispielsweise kann die zweite Schicht 2 eine Schichthöhe 17' in einem Bereich zwischen etwa 1 µm und etwa 10 µm, vorzugsweise etwa 3 µm aufweisen. Die erste Schicht 1 kann beispielsweise eine Schichthöhe 17 in einem Bereich zwischen etwa 5 µm und etwa 5 mm, vorzugsweise etwa 15 µm aufweisen. Beide Schichten 1, 2 können dabei aus einem Heißschmelzkleber gebildet sein, wobei die dünnere, zweite Schicht 2 aus einem hochwertigen Klebstoff gebildet ist und die dickere, erste Schicht 1 aus einem geringerwertigen Klebstoff, dessen Klebeigenschaften gegenüber denen der dünneren, zweiten Schicht 2 weniger effektiv sind. Die dickere, erste Schicht 1 kann als Wirkungsschicht 1 den Zweck erfüllen, Unebenheiten 38 auf der zu beklebenden Oberfläche insofern auszugleichen, als das Volumen der ersten, dickeren Schicht 1 die Oberflächenunebenheiten 38 ausfüllt. Diese Füllfunktion der ersten, dickeren (Wirkungs-)Schicht 1 trägt dazu bei, dass die hochwertigere, dünnere zweite Schicht 2 besser, d. h. effektiver auf der zu beklebenden Oberfläche haftet.

Die gemäß Fig. 6 dargestellte Funktionsschicht kann beispielsweise aus einem EVA gebildet sein, und die darunter angeordnete Wirkungsschicht aus einem UV-Acrylat. Durch das erfindungsgemäße Koextrudieren und anschließende ggf. unter Kühlung oder Aushärtung stattfindende Auftragen der Extrudate ist der Verbund dieser Materialien problemlos herstellbar.

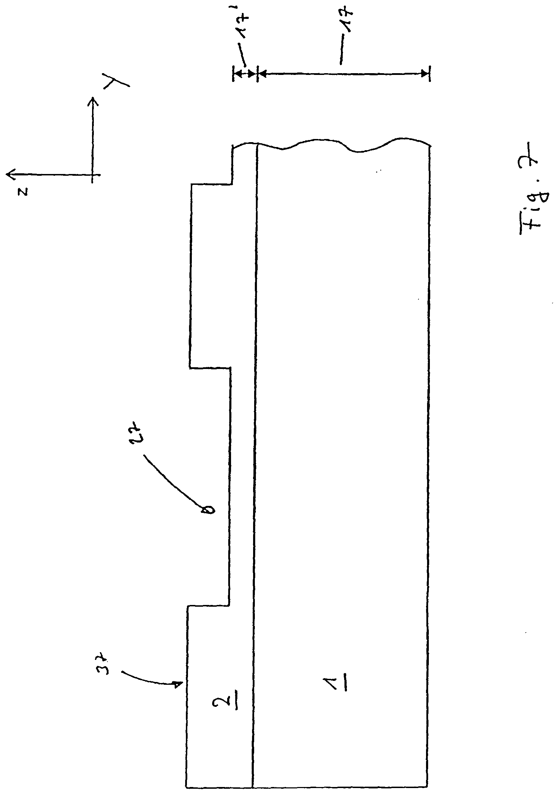

Eine aus unterschiedlichen Werkstoffen gebildete Schichtfolge eines Materialverbundes 3 kann der Fig. 7 entnommen werden. Insbesondere sind die unterschiedlichen Schichten 1, 2 gemäß Fig. 7 aus unterschiedlichen Klebstoffen gebildet. Die obere, dünnere Klebstoffschicht 2 weist eine Schwächung 27 auf, die durch eine abschnittsweise Reduzierung der Schichthöhe 17 gekennzeichnet ist. Dort wo die Schwächung gebildet ist, ist der Klebstoff weniger effizient, d. h. der Verbund klebt dort schlechter.

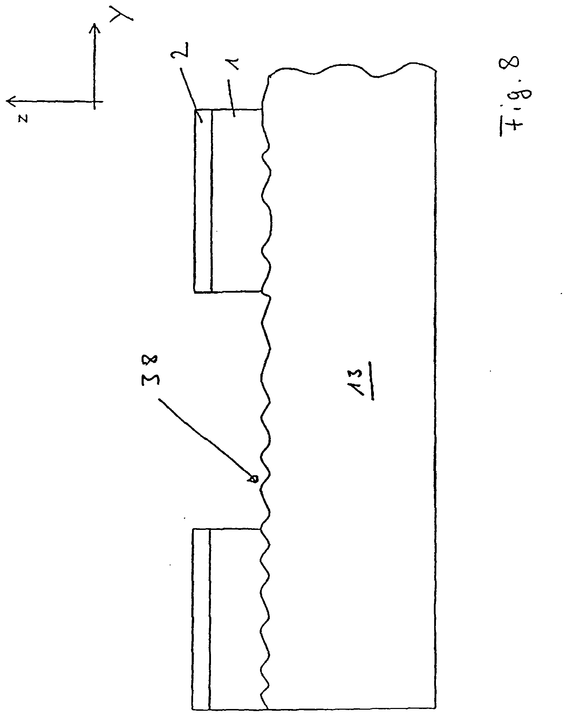

Ein Materialverbund 3, welcher auf einem Substrat 13 angeordnet ist, kann der Figur 8 entnommen werden. Dabei ist die zweite Schicht 2 auf der ersten Schicht 1 angeordnet und die erste Schicht 1 unmittelbar auf dem Substrat 13. Das Substrat 13 kann beispielsweise aus einer Folie oder einem Papier, beispielsweise aus einem Silikonpapier gebildet sein.

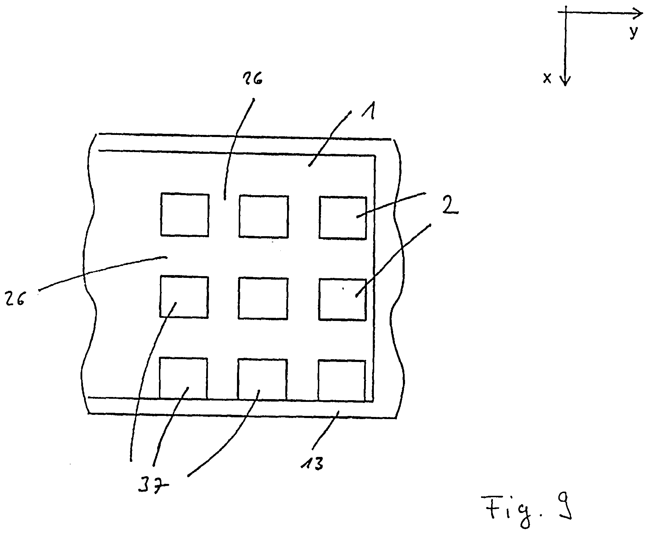

Eine Aufsicht auf einen Materialverbund 3 stellt die Fig. 9 schematisch dar. Dort ist zu sehen, dass der erste Flächenbereich 1 sich über die gesamte Länge 6 und über die gesamte Breite 4 des Verbunds 3 erstreckt. Auf dem ersten Flächenbereich 1 ist der zweite Flächenbereich 2 derart abschnittsweise angeordnet, dass zwischen den Abschnitten 37 des zweiten Flächenbereichs 2 in Längsrichtung y und in Querrichtung x jeweils streifenförmige Unterbrechungen 26 angeordnet sind. Dort, wo die Unterbrechungen 26 angeordnet sind, hat der Materialverbund 3 keine oder weniger klebende Eigenschaften gegenüber den klebenden Eigenschaften der Abschnitte 37 des auf dem ersten Flächenbereich 1 angeordneten zweiten Flächenbereichs 2.

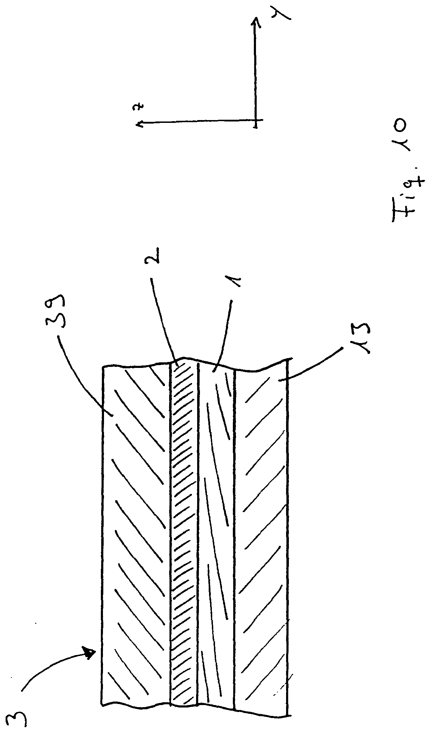

Der Fig. 10 kann schematisch ein vertikal (d. h. in z-Richtung) verlaufender Schnitt durch einen viertägigen Materialverbund 3 entnommen werden. Auf einem Substrat 13, welches beispielsweise aus einer Kunststofffolie gebildet sein kann, sind die Wirkungsschicht 1 (erster Flächenbereich) und die Funktionsschicht 2 (zweiter Flächenbereich) so aufgebracht, dass die Wirkungsschicht 1 auf dem Substrat 13 angeordnet ist und die Funktionsschicht 2 auf der Wirkungsschicht 1. Die Wirkungsschicht 1 kann beispielsweise einen anorganischen Klebstoff umfassen, der gut auf dem Substrat 13 haftet. Damit auf der Funktionsschicht 2 ein dritter Flächenbereich 39 haftend anordbar ist, kann die Funktionsschicht 2 einen organischen Klebstoff umfassen, wobei der dritte Flächenbereich 39 schichtartig insbesondere aus einem Faserwerkstoff gebildet sein kann. Es ergibt sich eine Konfiguration, bei der der erste und der zweite Flächenbereich 1, 2 zwischen dem Substrat 13 und dem dritten Flächenbereich 39 angeordnet sind.

Die Konfiguration des Materialverbunds gemäß Fig. 10 eignet sich beispielsweise für (Glasfaser-)Tapeten. Er kann dadurch geschaffen werden, dass das Substrat 13 in eine Transportrichtung y gefördert wird, wobei auf das Substrat 13 die Flächenbereiche 1 und 2 durch ein oben beschriebenes Koextrusionsverfahren aufgebracht werden. Während dessen wird auf den auf dem Substrat 13 bezogen auf die Transportrichtung y hinter der Stelle, wo das Koextrudat aufgetragen wird, beispeisweise über eine Walze oder eine alternative Zuführeinrichtung der dritte Flächenbereich aufgebracht. Die vier Lagen 13, 1, 2 und 39 sind auf diese weise in einem Herstellungsablauf aufeinander auftragbar, insbesonder erfolgt das Aufbringen des dritten Flächenbereichs 39 "inline", d. h. während der Herstellung der Lagen 13, 1 und 2.

**BEZUGSZEICHENLISTE**

| | | | |
|---|---|---|---|
| 1 | erster Flächenbereich | 23 | Leitung |
| 2 | zweiter Flächenbereich | 24 | Auslass |
| 3 | Materialverbund | 25 | Heizung |
| 4 | Verbundbreite | 26 | Unterbrechung |
| 5 | Verbundhöhe | 27 | Schwächung |
| 6 | Verbundlänge | 28 | Kühleinrichtung |
| 7 | Auftrageinrichtung | 29 | Pumpe |
| 8 | Auftragdüse, Koextrusions-Breitschlitzdüse | 30 | Schaltelement |
| | | 30A | Ventil |
| 9 | Transporteinrichtung | 30B | Rückführung |
| 10 | Transportband | 32 | Zuleitung |
| 11 | Transportfläche | 33 | Steuereinrichtung |
| 12 | Extrudatvorhang | 34 | Heizvorrichtung |
| 13 | Substrat | 35 | Extrudatoberfläche |
| 14 | Koextrudat | 36 | Trennwand |
| 15 | Flächenbereichsbreite | 37 | Abschnitt |
| 16 | Flächenbereichslänge | 38 | Unebenheiten |
| 17, 17' | Flächenbereichshöhe | 39 | dritter Flächenbereich |
| 18 | Koextrusionskanal | 40 | Pumpenblock |
| 19A..19F | Koextrusionskammern | 41 | Antrieb |
| 19A'..19F' | Koextrusionskammern | 43 | Zirkulationsmodul |
| 20 | erster Einlass | | |
| 20' | zweiter Einlass | x | Querrichtung |
| 21 | erstes Extrudat | y | Transportrichtung, |
| 21' | zweites Extrudat | | Längsrichtung |
| 22 | Fördereinrichtung | z | vertikale Richtung |
| 22' | Fördereinrichtung | | |

## Patentansprüche

1. Vorrichtung zum Herstellen und/oder Auftragen eines aus zumindest zwei Flächenbereichen (1, 2), von denen zumindest einer aus einem Heißschmelz-Klebstoff gebildet ist, gebildeten, im Wesentlichen flächigen Materialverbunds (3) vorgebbarer Verbundbreite (4), vorgebbarer Verbundhöhe (5) und/oder vorgebbarer Verbundlänge (6), wobei die Vorrichtung eine eine Transportrichtung (y) festlegende Transporteinrichtung (9) mit einer Transportfläche (11) umfasst sowie eine Auftrageinrichtung (7) mit einer einen schlitzförmigen, im Wesentlichen quer zur Auftragrichtung (y) angeordneten Auslass (24) aufweisenden Koextrusionsdüse (8), mit welcher der erste Flächenbereich (1) aus einem ersten Extrudat (21) und der zweite Flächenbereich (2) aus einem zweiten Extrudat (21') auf die Transportfläche (11) extrudierbar ist, wobei die Koextrusionsdüse (8) zumindest eine Fördereinrichtung (22, 22') zum Fördern eines Extrudates (21, 21') auf die Transportfläche (11) umfasst, wobei mit der Fördereinrichtung (22) das Fördervolumen, die Fördermasse, die Fördergeschwindigkeit und/oder die Förderdauer zumindest eines der Extrudate (21, 21') steuerbar ist, wobei die Koextrusionsdüse (8) so ausgebildet und angeordnet ist, dass das die Koextrusionsdüse (8) verlassende Koextrudat als ein in vertikaler oder nahezu vertikaler Richtung verlaufender Gießvorhang gebildet ist, der auf die Transporteinrichtung (9) oder auf ein auf der Transportfläche (11) in Transportrichtung (y) förderbares Substrat gerichtet ist, und wobei die Koextrusionsdüse (8) einen Koextrusionskanal (18) aufweist, welcher in einem Gehäuse der Koextrusionsdüse (8) angeordnet ist, wobei in den Koextrusionskanal (18) ein erster und zweiter Einlass (20, 20') für das erste und zweite Extrudat (21, 21') mündet, und wobei an den Koextrusionskanal (18) der Auslass (24) für das Koextrudat angeschlossen ist, wobei die Flächenbereiche (1, 2) in entlang der Verbundhöhe (5) aufeinander gestapelten Schichten des Materialverbunds (3) gebildet sind,
**dadurch gekennzeichnet,**
**daß** der Koextrusionskanal (18) mehrere Koextrusionskammern (19A, 19B,..., 19A', 19B', ...) umfasst, wobei jede Koextrusionskammer (19A, 19B, ... 19A', 19B', ...) des Koextrusionskanals (18) jeweils mit zumindest einer Fördereinrichtung (22; 22') fluidisch verbunden ist.

2. Vorrichtung nach Anspruch 1,
**dadurch gekennzeichnet, dass**
die Fördereinrichtung (22, 22') zumindest eine Pumpe (29) zum Fördern eines Extrudates (21, 21') umfasst.

3. Vorrichtung nach Anspruch 1 oder 2,
**dadurch gekennzeichnet, dass**
die Fördereinrichtung (22) zumindest ein Schaltelement (30) umfasst, welches vorzugsweise ein Ventil (30A) und/oder eine Rückführung (30B) aufweist, so dass das von der Fördereinrichtung (22) geförderte Extrudat (21, 21') innerhalb der Auftrageinrichtung (7) oder innerhalb mindestens einer der Fördereinrichtungen (22) zirkulierbar ist.

4. Koextrusionsdüse zum Erzeugen und/oder Auftragen eines flächigen Materialauftrags eines Materialverbunds (3), insbesondere für eine Auftrageinrichtung (7) einer Vorrichtung nach einem der Ansprüche 1 bis 3, wobei der Materialverbund (3) aus einem ein erstes und zumindest ein zweites Extrudat (21, 21') umfassendes Koextrudat (14) gebildet ist, und einen aus dem ersten Extrudat (21) gebildeten ersten Flächenbereich (1) und einen aus zumindest dem zweiten Extrudat (21') gebildeten zweiten Flächenbereich (2) umfasst, wobei zumindest einer der Flächenbereiche (1, 2) des Materialverbunds (3) aus einem Heissschmelz-Klebstoff gebildet ist, und wobei die Koextrusionsdüse (8) einen ersten Einlass (20) für das erstes Extrudat (21), einen zweiten Einlass (20') für das zweite Extrudat (21') und einen eine schlitzförmige Öffnung umfassenden, die Verbundbreite (4) des Materialverbunds (3) bestimmenden Auslass (24) für das Koextrudat (14) aufweist, wobei die Koextrusionsdüse (8) zumindest eine integrierte Fördereinrichtung (22) aufweist, welche fluidisch mit einem oder mehreren Einlassen (20, 20') verbunden ist, mit welcher zumindest ein Extrudat (21, 21') durch die Koextrusionsdüse (8) zum Auslass (24) förderbar ist, und mit welcher das Fördervolumen, die Fördermasse, die Fördergeschwindigkeit und/oder die Förderdauer zumindest eines der Extrudate (21, 21') steuerbar ist, wobei die Koextrusionsdüse (8) so ausgebildet und angeordnet ist, dass das die Koextrusionsdüse (8) verlassende Koextrudat als in vertikaler oder nahezu vertikaler Richtung verlaufender Gießvorhang ausbildbar ist, der auf eine Transporteinrichtung oder auf ein auf eine Transportfläche in Transportrichtung förderbares Substrat gerichtet ist, und wobei die Koextrusionsdüse (8) einen Koextrusionskanal (18) aufweist, welcher in einem Gehäuse der Koextrusionsdüse (8) angeordnet ist, wobei in den Koextrusionskanal (18) ein erster und zweiter Einlass (20, 20') für das erste und zweite Extrudat (21, 21') mündet, und wobei an den Koextrusionskanal (18) der Auslass (24) für das Koextrudat angeschlossen ist,
wobei die Flächenbereiche (1, 2) in entlang der Verbundhöhe (5) aufeinander gestapelten Schichten des Materialverbunds (3) gebildet sind,
**dadurch gekennzeichnet,**
**daß** der Koextrusionskanal (18) mehrere Koextrusionskammern (19A, 19B,..., 19A', 19B', ...) umfasst, wobei jede Koextrusionskammer (19A, 19B, ... 19A', 19B', ...) des Koextrusionskanals (18) jeweils mit zumindest einer Fördereinrichtung (22; 22') fluidisch verbunden ist.

5. Koextrusionsdüse (8) nach Anspruch 4,
**dadurch gekennzeichnet, dass**
zumindest eine der Fördereinrichtungen (22) zumindest eine Pumpe (29) und zumindest ein Schaltelement (30) umfasst, welches ein Ventil (30A) und zumindest eine fluidische, die Pumpe (29) umgehende, vorzugsweise schaltbare Rückführung (30B) aufweist.

## Claims

1. Device for producing and/or applying an essentially two-dimensional composite (3) formed of at least two areal regions (1, 2), at least one of which is formed of a hot-melt adhesive, in predeterminable composite width (4), predeterminable composite height (5) and/or predeterminable composite length (6), said device comprising a transporting appliance (9) having a transport area (11) and defining a transport direction (y) and also an applicator appliance (7) having a coextrusion die (8) which includes a slot-shaped outlet (24) disposed essentially transversely to the application direction (y) and with which the first areal region (1) comprising a first extrudate (21) and the second areal region (2) comprising a second extrudate (21') is extrudable onto the transport area (11), wherein the coextrusion die (8) comprises at least one conveying appliance (22, 22') for conveying an extrudate (21, 21') onto the transport area (11), wherein the conveyed volume, the conveyed mass, the conveyance velocity and/or the metering time of at least one of the extrudates (21, 21') is controllable using the conveying appliance (22), wherein the coextrusion die (8) is configured and arranged such that the coextrudate leaving the coextrusion die (8) is formed as a vertical or almost vertical falling curtain onto the transporting appliance (9) or onto a substrate conveyable on the transport area (11) in the transport direction (y) and wherein the coextrusion die (8) comprises a coextrusion channel (18) which is disposed in a housing of the coextrusion die (8), wherein first and second inlets (20, 20') for the first and second extrudates (21, 21') empty into the coextrusion channel (18) and wherein the outlet (24) for the coextrudate is connected to the coextrusion channel (18), wherein the areal regions (1, 2) form layers of the composite (3) which are stacked one on top of the other along the composite height (5),
**characterized in that**
the coextrusion channel (18) comprises a plurality of coextrusion chambers (19A, 19B, ..., 19A', 19B', ...), wherein each and every coextrusion chamber (19A, 19B, ..., 19A', 19B', ...) of the coextrusion channel (18) is in each case in fluidic communication with at least one conveying appliance (22; 22').

2. Device according to Claim 1,
**characterized in that**
the conveying appliance (22; 22') comprises at least one pump (29) for conveying an extrudate (21, 21').

3. Device according to Claim 1 or 2,
**characterized in that**
the conveying appliance (22) comprises at least one switch element (30) which preferably includes a valve (30A) and/or a return line (30B) so that the extrudate (21, 21') conveyed by the conveying appliance (22) is circulatable within the applicator appliance (7) or within at least one of the conveying appliances (22).

4. Coextrusion die for generating and/or applying a two-dimensional application of a composite (3), in particular for an applicator appliance (7) of a device according to any of Claims 1 to 3, wherein the composite (3) is formed of a coextrudate (14) comprising a first and at least a second extrudate (21, 21'), and comprises a first areal region (1) formed of the first extrudate (21) and a second areal region (2) formed of at least the second extrudate (21'), wherein at least one of the areal regions (1, 2) of the composite (3) is formed of a hot-melt adhesive and wherein the coextrusion die (8) has a first inlet (20) for the first extrudate (21), a second inlet (20') for the second extrudate (21') and an outlet (24) which comprises a slot-shaped orifice, which determines the composite width (4) of the composite (3) for the coextrudate (14), wherein the coextrusion nozzle (8) comprises at least one integrated conveying appliance (22) which is in fluidic communication with one or more inlets (20, 20') and with which at least one extrudate (21, 21') is conveyable through the coextrusion die (8) to the outlet (24), and with which the conveyed volume, the conveyed mass, the conveyance velocity and/or the metering time of at least one of the extrudates (21, 21') is controllable, wherein the coextrusion die (8) is configured and arranged such that the coextrudate leaving the coextrusion (8) die is formable as a vertical or almost vertical falling curtain onto the transporting appliance or onto a substrate conveyable on the transport area in the transport direction and wherein the coextrusion die (8) comprises a coextrusion channel (18) which is disposed in a housing of the coextrusion die (8), wherein first and second inlets (20, 20') for the first and second extrudates (21, 21') empty into the coextrusion channel (18) and wherein the outlet (24) for the coextrudate is connected to the coextrusion channel (18), wherein the areal regions (1, 2) form layers of the composite (3) which are stacked one on top of the other along the composite height (5),
**characterized in that**
the coextrusion channel (18) comprises a plurality of coextrusion chambers (19A, 19B, ..., 19A', 19B', ...), wherein each and every coextrusion chamber (19A, 19B, ..., 19A', 19B', ...) of the coextrusion channel (18) is in each case in fluidic communication with at least one conveying appliance (22; 22').

5. Coextrusion die according to Claim 4, **characterized in that**
at least one of the conveying appliances (22) comprises at least one pump (29) and at least one switch element (30) which includes a valve (30A) and at least one fluidic, preferably switchable return line (30B) which bypasses the pump (29).

## Revendications

1. Dispositif pour la production et/ou l'application d'un matériau composite essentiellement plat (3), formé par au moins deux zones plates (1, 2), parmi lesquelles au moins une est formée par un adhésif thermofusible, de largeur de composite (4) prédéfinissable, de hauteur de composite (5) prédéfinissable et/ou de longueur de composite (6) prédéfinissable, le dispositif comportant un appareil de transport (9) établissant une direction de transport (y), muni d'une surface de transport (11), ainsi qu'un appareil d'application (7) muni d'une buse de coextrusion (8) comprenant une sortie (24) en forme de fente, agencée de manière essentiellement perpendiculaire à la direction d'application (y), avec laquelle la première zone plate (1) peut être extrudée à partir d'un premier extrudat (21) et la deuxième zone plate (2) peut être extrudée à partir d'un deuxième extrudat (21') sur la surface de transport (11), la buse de coextrusion (8) comportant au moins un appareil d'avancement (22, 22') pour l'avancement d'un extrudat (21, 21') sur la surface de transport (11), l'appareil d'avancement (22) permettant de réguler le volume d'avancement, la masse d'avancement, la vitesse d'avancement et/ou la durée d'avancement d'au moins un des extrudats (21, 21'), la buse de coextrusion (8) étant configurée et agencée de telle sorte que le coextrudat quittant la buse de coextrusion (8) est mis sous la forme d'un rideau de coulée s'écoulant dans la direction verticale ou pratiquement verticale, qui est dirigé vers l'appareil de transport (9) ou vers un substrat pouvant être fait avancer sur la surface de transport (11) dans la direction de transport (y), et la buse de coextrusion (8) comprenant un canal de coextrusion (18), qui est agencé dans un boîtier de la buse de coextrusion (8), une première et deuxième entrée (20, 20') pour le premier et deuxième extrudat (21, 21') débouchant dans le canal de coextrusion (18), et la sortie (24) pour le coextrudat étant raccordée au canal de coextrusion (18), les zones plates (1, 2) étant formées dans des couches du matériau composite (3) empilées les unes sur les autres le long de la hauteur de composite (5),
**caractérisé en ce que**
le canal de coextrusion (18) comporte plusieurs chambres de coextrusion (19A, 19B,..., 19A', 19B',...), chaque chambre de coextrusion (19A, 19B,..., 19A', 19B',...) du canal de coextrusion (18) étant en liaison fluidique avec respectivement au moins un appareil d'avancement (22 ; 22').

2. Dispositif selon la revendication 1, **caractérisé en ce que** l'appareil d'avancement (22, 22') comporte au moins une pompe (29) pour l'avancement d'un extrudat (21, 21').

3. Dispositif selon la revendication 1 ou 2, **caractérisé en ce que** l'appareil d'avancement (22) comporte au moins un élément de commutation (30), qui comprend de préférence une soupape (30A) et/ou une conduite de recyclage (30B), de telle sorte que l'extrudat (21, 21') qui est fait avancer par l'appareil d'avancement (22) puisse être mis en circulation au sein de l'appareil d'application (7) ou au sein d'au moins un des appareils d'avancement (22).

4. Buse de coextrusion pour la génération et/ou l'application d'une couche de matériau plate d'un matériau composite (3), notamment pour un appareil d'application (7) d'un dispositif selon l'une quelconque des revendications 1 à 3, le matériau composite (3) étant formé par un coextrudat (14) comportant un premier et au moins un deuxième extrudat (21, 21'), et comportant une première zone plate (1) formée par le premier extrudat (21) et une deuxième zone plate (2) formée par au moins le deuxième extrudat (21'), au moins une des zones plates (1, 2) du matériau composite (3) étant formée par un adhésif thermofusible, et la buse de coextrusion (8) comprenant une première entrée (20) pour le premier extrudat (21), une deuxième entrée (20') pour le deuxième extrudat (21') et une sortie (24) comportant une ouverture en forme de fente, déterminant la largeur de composite (4) du matériau composite (3), pour le coextrudat (14), la buse de coextrusion (8) comprenant au moins un appareil d'avancement intégré (22), qui est en liaison fluidique avec une ou plusieurs entrées (20, 20'), avec lequel au moins un extrudat (21, 21') peut être fait avancer au travers de la buse de coextrusion (8) jusqu'à la sortie (24), et avec lequel le volume d'avancement, la masse d'avancement, la vitesse d'avancement et/ou la durée d'avancement d'au moins un des extrudats (21, 21') peuvent être régulés, la buse de coextrusion (8) étant configurée et agencée de telle sorte que le coextrudat quittant la buse de coextrusion (8) peut être mis sous la forme d'un rideau de coulée s'écoulant dans la direction verticale ou pratiquement verticale, qui est dirigé vers un appareil de transport ou vers un substrat pouvant être fait avancer sur une surface de transport dans la direction de transport, et la buse de coextrusion (8) comprenant un canal de coextrusion (18), qui est agencé dans un boîtier de la buse de coextrusion (8), une première et deuxième entrée (20, 20') pour le premier et deuxième extrudat (21, 21') débouchant dans le canal de coextrusion (18), et la sortie (24) pour le coextrudat étant raccordée au canal de coextrusion (18),
les zones plates (1, 2) étant formées dans des couches du matériau composite (3) empilées les unes sur les autres le long de la hauteur de composite (5), **caractérisé en ce que**
le canal de coextrusion (18) comporte plusieurs chambres de coextrusion (19A, 19B,..., 19A', 19B',...), chaque chambre de coextrusion (19A, 19B,..., 19A', 19B',...) du canal de coextrusion (18) étant en liaison fluidique avec respectivement au moins un appareil d'avancement (22 ; 22').

5. Buse de coextrusion (8) selon la revendication 4, **caractérisée en ce qu'**au moins un des appareils d'avancement (22) comporte au moins une pompe (29) et au moins un élément de commutation (30), qui comprend une soupape (30A) et au moins une conduite de recyclage fluidique (30B), contournant la pompe (29), de préférence commutable.
